# EUROPEAN PATENT APPLICATION

(11) **EP 4 383 492 A1**
(43) Date of publication of application: **12.06.2024**
(21) Application number: 21952350.3
(22) Date of filing: 05.08.2021
(51) Int. Cl.: H02H 3/08, H02H 7/18, H01R 13/66

(54) **SMART CONNECTION APPARATUS, STARTING POWER SOURCE DEVICE AND BATTERY CLIP DEVICE**

(71) Applicant: Shenzhen Carku Technology Co., Limited, Shenzhen, Guangdong 518000 (CN)
(72) Inventor: LEI, Yun, Shenzhen, Guangdong 518000 (CN); ZHANG, Zhifeng, Shenzhen, Guangdong 518000 (CN); CHENG, Ming, Shenzhen, Guangdong 518000 (CN)
(74) Representative: Huang, Liwei
(86) International application number: PCT/CN2021/111027
(87) International publication number: WO 2023/010464

(57) **Abstract**

A smart connection device, a jump starter device, and a battery clamp device are provided in the present disclosure. The smart connection device includes a switch module, a load detection module, and a controller. The switch module is electrically connected between a power connection terminal and a load connection terminal. The load detection module is configured to detect a state of an external load, and output a corresponding detection signal at a detection signal output terminal of the load detection module. The detection signal is used for controlling the switch module. In the smart connection device, by means of the load detection module, the state of the load is detected and a single analog signal is output to indicate the state of the load. Therefore, collection requirements for the analog signal can be effectively reduced, a peripheral control circuit can be simplified, a failure rate of a control system can be reduced, and safety and reliability of the product can be improved.

## Description

### TECHNICAL FIELD

This disclosure relates to the field of electronic technology, and in particular to a smart connection device, a jump starter device, and a battery clamp device.

### BACKGROUND

When starting and igniting vehicles by means of emergency jump starters, battery clamps are required to connect the emergency jump starters to vehicle batteries. After the battery clamp is clamped on the vehicle battery, on condition that a positive electrode and a negative electrode of the jump starter are reversely connected to a positive electrode and a negative electrode of the vehicle battery, the jump starter is unable to charge the vehicle battery. In addition, on condition that the positive electrode and the negative electrode of the jump starter are normally connected to the positive electrode and the negative electrode of the vehicle battery, if the jump starter keeps being connected to the vehicle battery, the jump starter may automatically output electric energy to charge the vehicle battery until the jump starter is in a state of lacking of electricity or the jump starter is electrically disconnected from the vehicle battery, so that the jump starter does not have enough electric energy to start the vehicle again or the number of times that the vehicle can be started with the electric energy is reduced.

### SUMMARY

In view of the defects of the above detection circuit structure, a smart connection device, a jump starter device, and a battery clamp device are provided in the present disclosure. Therefore, a single analog signal can be output to indicate a state of an external load, thereby effectively reducing collection requirements of a controller for the analog signal, and simplifying a structure of a control circuit. A failure rate of the control system is further reduced, thereby greatly improving the safety and reliability of the product, and reducing a material cost of the product.

In a first aspect, a smart connection device is provided in the present disclosure. The smart connection device includes a power connection terminal, a load connection terminal, a switch module, and a load detection module, and a controller. The power connection terminal is configured to be electrically connected to a power module. The load connection terminal is configured to be electrically connected to an external load. The switch module is electrically connected between the power connection terminal and the load connection terminal. The load detection module is electrically connected to the load connection terminal. The load detection module has a detection signal output terminal. The load detection module is configured to detect a state of the external load, and output a corresponding detection signal at the detection signal output terminal according to a detection result. The detection signal is used for controlling the switch module.

In a second aspect, a jump starter device is provided in the present disclosure. The jump starter device includes a housing, an energy-storage assembly, and the smart connection device in the first aspect. The energy-storage assembly and at least part of the smart connection device are disposed in the housing. The power connection terminal of the smart connection device is electrically connected to the energy-storage assembly.

In a third aspect, a battery clamp device is provided in the present disclosure. The battery clamp device includes a housing, a power input interface, a connection element, and the smart connection device in the first aspect. The power input interface is disposed on the housing. The power input interface is configured to be electrically connected to an external power device. The external power device includes an energy-storage assembly. At least part of the smart connection device is disposed in the housing. The power connection terminal of the smart connection device is electrically connected to the power input interface, and is configured to be electrically connected to the energy-storage assembly of the external power device through the power input interface. One end of the connection element is electrically connected to the load connection terminal of the smart connection device, and the other end of the connection element is configured to be electrically connected to the external load.

For the smart connection device provided in the present disclosure, the load detection module detects the state of the external load, and outputs the single analog signal to indicate the state of the external load. Then according to the single analog signal, the controller analyzes data and makes corresponding control operation, so that the collection requirements of the controller for the analog signal can be effectively reduced. Therefore, the complexity of a peripheral control circuit is reduced, the circuit becomes simpler to be controlled, and the failure rate of the control system can be reduced, thereby greatly improving the safety and reliability of the product, and reducing the material cost of the product.

### BRIEF DESCRIPTION OF THE DRAWINGS

To describe the technical solutions in implementations of the present disclosure more clearly, the accompanying drawings required for describing implementations will be briefly introduced below. Apparently, the accompanying drawings in the following description are merely some implementations of the present disclosure, and for those of ordinary skill in the art, other accompanying drawings can also be obtained from these accompanying drawings without creative efforts.
FIG. 1 is a schematic diagram of functional modules of a smart connection device provided in a first implementation of the present disclosure.
FIG. 2 is a schematic diagram of a circuit structure of a current output circuit of the smart connection device illustrated in FIG. 1.
FIG. 3 is a schematic diagram of functional modules of a smart connection device provided in a second implementation of the present disclosure.
FIG. 4 is a schematic diagram of a circuit structure of a load detection module provided in a first implementation of the present disclosure.
FIG. 5 is a schematic diagram of a circuit structure of a load detection module provided in a second implementation of the present disclosure.
FIG. 6 is an equivalent circuit diagram of circuit structures among a voltage input terminal, a first reference point, a second reference point, and a first voltage-division-node illustrated in FIG. 5.
FIG. 7 is a schematic diagram of functional modules of a smart connection device provided in a third implementation of the present disclosure.
FIG. 8 is a schematic diagram of a circuit structure of a regulated power module illustrated in FIG. 7.
FIG. 9 is a schematic diagram of functional modules of a jump starter device provided in a first implementation of the present disclosure.
FIG. 10 is a schematic structural diagram of the jump starter device provided in FIG. 9.
FIG. 11 is a schematic diagram of functional modules of a jump starter device provided in a second implementation of the present disclosure.
FIG. 12 is a schematic structural diagram of the jump starter device illustrated in FIG. 11.
FIG. 13 is a schematic diagram of functional modules of a battery clamp provided in an implementation of the present disclosure.
FIG. 14 is a schematic structural diagram of the battery clamp illustrated in FIG. 13.

Description of symbols of main components: smart connection device - 100, 101, 102, 103, 104; current output current - 20; power connection terminal - 21; positive power-connection-terminal - BAT+; negative power-connection-terminal - BAT-; load connection terminal - 22; positive load-connection-terminal - CARA; negative load-connection-terminal - CAR-; switch module - 23; ground terminal - GND, PGND; current detection element - J1; load detection module - 30; first detection terminal - 301; second detection terminal - 302; detection signal output terminal - 303; voltage output terminal - 304; voltage input terminal - 305; detection signal - VOUT_SN; load forward-reverse connection detection circuit - 31; sensor device - U3; first detection pin - 2; second detection pin - 1; voltage input pin - 4; output pin - 3; light-emitting diode (LED) - D0; positive electrode - A; negative electrode - K; phototransistor - Q0; switch circuit - 311; triode - Q5; Zener diode - ZD1; load electrical-parameter detection circuit - 32; first voltage-division-resistor - R17; second voltage-division-resistor - R18; third voltage-division-resistor - R15; voltage detection point - P; diode - D7, D8, D9, D10; resistor - R16, R19, R20, R40; capacitor - C8; load detection module - 30'; voltage output terminal - 304'; voltage input terminal - 305'; load electrical-parameter detection circuit - 31'; first voltage-division-module - 312; second voltage-division-module - 313; load electrical-parameter detection circuit - 32'; third voltage-division-module - 321; first switch-unit - Q11; second switch-unit - Q10; third switch-unit - Q9; fourth switch-unit - Q7; resistor - R28, R29, R30, R31, R32, R34, R35, R36, R37, R38; diode - D12, D13, D14, D16; capacitor - C10; first voltage-division-node - P1; second voltage-division-node - P2; third voltage-division-node - P3; electrical connection point - F; first reference point - A1; second reference point - A2; power management circuit - 33; controller - 40; drive signal - RELAY_EN2; detection signal input terminal - 41; drive signal output terminal - 42; control terminal, base - B; second connection terminal, collector - C; first connection terminal, emitter - E; communication interface module - 81; power-input-state detection module - 82; state indication module - 83; regulated power module - 84; button control module - 85; temperature detection module - 86; current detection module - 87; over-current and short-circuit protection module - 88; jump starter device - 200, 200'; housing - 201, 201'; energy-storage assembly - 202; connection jack - 203; charging interface - 204; battery clamp device - 900; housing - 901; power input interface - 902; connection element - 400, 205, 903; first wire-clamp - 401; second wire-clamp - 402; cable - 403; connection plug - 404; external power device - 500; connection jack - 501.

The present disclosure will be further illustrated by following specific implementations with reference to the above-mentioned accompanying drawings.

### DETAILED DESCRIPTION

Technical solutions in implementations of the present disclosure will be clearly and completely described below with reference to the accompanying drawings in the implementations of the present disclosure. It is understood that the accompanying drawings are only for illustrative purposes, and are only schematic drawings, which cannot be understood as restrictions on the present disclosure. Obviously, the described implementations are only part of embodiments of the present disclosure, not all the embodiments. Based on the implementations in the present disclosure, all other implementations obtained by those of ordinary skill in the art without paying any creative efforts fall within the scope of protection of the present disclosure.

Unless otherwise defined, all technical and scientific terms used in the present disclosure have the same meanings as those commonly understood by those skilled in the art. The terms used in the specification of the present disclosure are only for the purpose of describing the specific implementation, and are not intended to limit the present disclosure.

In an application of emergency starting ignition for a vehicle by means of a jump starter device such as an emergency jump starter, for the jump starter device, in order to detect a forward-reverse connection state of a load such as a vehicle battery, the present practice is usually to set up a load forward-reverse connection-state detection circuit to perform corresponding detection and output a corresponding detection signal. In order to avoid quick consumption of the power of the jump starter device due to charging to the load, the present practice is to set up a load voltage-state detection circuit to detect whether the vehicle battery is used for starting the vehicle. When the vehicle battery is correctly connected to the jump starter device and is configured to start the vehicle, the jump starter device discharges the vehicle battery, to supply instantaneous high currents to the vehicle to start the vehicle. In other words, for the detection of forward-reverse connection state of the vehicle battery and the detection of voltage state of the vehicle battery, the present practice is to respectively set up corresponding detection circuits to perform corresponding detections, and respectively output corresponding analog detection signals to a controller for relevant data analysis, so as to make corresponding control operations. However, for this practice of respectively setting up different detection circuits according to different detection requirements, on the one hand, a structure of the product is complex and a manufacturing cost is high, and on the other hand, due to more collection requirements for the analog signal and relatively complex peripheral control circuits, a failure rate of a control system increases, thus greatly increasing the after-sales cost of the product.

In order to solve the above problems, a smart connection device is provided in the present disclosure. A load detection module simultaneously detects a connection state of an external load and an electrical parameter of the external load, and outputs a single analog signal to simultaneously indicate the connection state of the external load and the electrical parameter of the external load. Then according to the single analog signal, a controller analyzes data and makes a corresponding control operation, so that the collection requirements of the controller for the analog signal can be effectively reduced. Therefore, the complexity of a peripheral control circuit is reduced, the circuit becomes simpler to be controlled, and the failure rate of the control system can be reduced, thereby greatly improving the safety and reliability of the product, and reducing the material cost of the product. The smart connection device may be applied to a jump starter device such as an emergency jump starter, or may be applied to a battery clamp device.

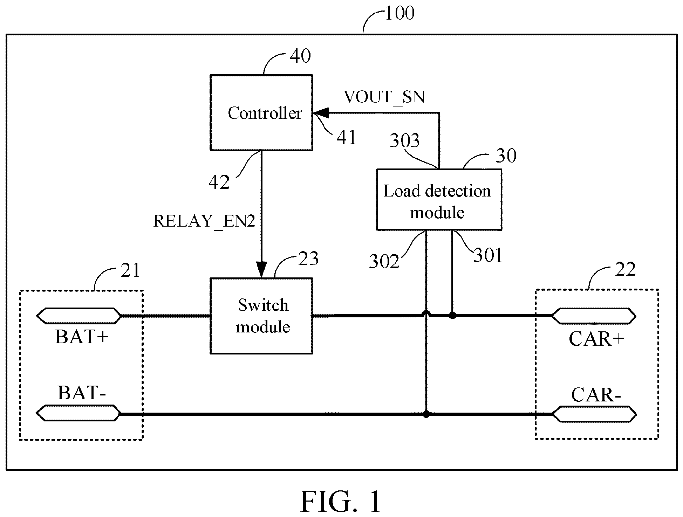

FIG. 1 is a schematic diagram of functional modules of a smart connection device 100 provided in a first implementation of the present disclosure. As illustrated in FIG. 1, the smart connection device 100 includes a power connection terminal 21, a load connection terminal 22, and a switch module 23. The power connection terminal 21 is configured to be electrically connected to a power module (not shown in the figure). The load connection terminal 22 is configured to be electrically connected to an external load (not shown in the figure). The switch module 23 is electrically connected between the power connection terminal 21 and the load connection terminal 22.

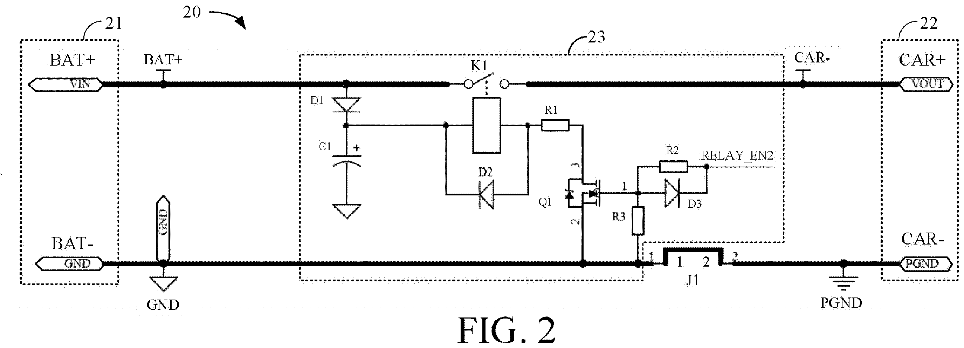

Referring to FIG. 1 and FIG. 2 together, the power connection terminal 21, the load connection terminal 22, and the switch module 23 form a current output circuit 20 of the power module for the external load. The switch module 23 is configured to conduct or disconnect the current output circuit 20. In this way, the power module can discharge the external load through the smart connection device 100.

In this implementation, the power connection terminal 21 includes a positive power-connection-terminal BAT+ and a negative power-connection-terminal BAT-. The positive power-connection-terminal BAT+ and the negative power-connection-terminal BAT- are configured to be electrically connected to a positive electrode and a negative electrode of the power module in a one-to-one correspondence. The power module is configured to be connected to the smart connection device 100 through the power connection terminal 21, so as to supply an operation voltage to the smart connection device 100, and supply power to the external load through the switch module 23. It can be understood that when the smart connection device 100 is applied to an emergency jump starter, the power module may be a built-in energy-storage assembly of the emergency jump starter. When the smart connection device 100 is applied to a battery clamp device, the power module may be an external power device, such as an external emergency jump starter or an energy-storage assembly included in other energy-storage power devices.

The load connection terminal 22 includes a positive load-connection-terminal CAR+ and a negative load-connection-terminal CAR-. The positive load-connection-terminal CAR+ and the negative load-connection-terminal CAR- are configured to be electrically connected to a positive electrode and a negative electrode of the external load in a one-to-one correspondence. The negative load-connection-terminal CAR- is also electrically connected to a ground terminal PGND, and is electrically connected to a ground terminal GND through a current detection element J1. It can be understood that the ground terminal PGND and the ground terminal GND are reference grounds of different power networks.

The external load may be a vehicle battery or a vehicle engine. It can be understood that the vehicle battery includes, but is not limited to, a lead-acid battery, a lithium battery, a super capacitor, etc. For example, it is assumed that the power module is a battery module contained in an external emergency jump starter, and the external load is a vehicle battery or a vehicle engine, when the external emergency jump starter is correctly connected to (also referred to as "forward connected to", hereinafter referred to as "forward connected to") the smart connection device 100 through the power connection terminal 21, and the external load is forward connected to the load connection terminal 22, the external emergency jump starter is able to discharge the external load through the current output circuit 20 formed by the power connection terminal 21, the switch module 23, and the load connection terminal 22, so as to supply emergency starting electrical energy to the vehicle battery or the vehicle engine. It can also be understood that the external emergency jump starter charges the vehicle battery or vehicle engine. In this way, the vehicle can still be started even when the vehicle battery or the vehicle engine is insufficiently in electric quantity.

The smart connection device 100 further includes a controller 40 electrically connected to the switch module 23. The controller 40 is configured to perform on-off control on the switch module 23. In this implementation, the controller 40 is configured to output a drive signal RELAY_EN2 to the switch module 23, to turn on the switch module 23. In other words, the switch module 23 enters an on state when receiving the drive signal RELAY_EN2 output by the controller 40, thereby conducting the electrical connection between the power connection terminal 21 and the load connection terminal 22, so that the power module can be electrically connected to the external load, and discharge the external load. The switch module 23 is in an off state when not receiving the drive signal RELAY_EN2 output by the controller 40, thereby disconnecting the electrical connection between the power connection terminal 21 and the load connection terminal 22, so that the power module is unable to discharge the external load.

In this implementation, the smart connection device 100 further includes a load detection module 30 electrically connected to the load connection terminal 22. The load detection module 30 is configured to detect a state of the external load through the load connection terminal 22, and output a corresponding detection signal VOUT_SN according to a detection result. The detection signal VOUT_SN is used for controlling the switch module 23.

The state of the external load at least includes a connection state of the external load and an electrical parameter of the external load. The electrical parameter of the external load includes at least one selected from a voltage, a current, a power, a resistance, or a temperature of the external load.

In this implementation, the load detection module 30 has a first detection terminal 301, a second detection terminal 302, and a detection signal output terminal 303. The first detection terminal 301 of the load detection module 30 is electrically connected to the positive load-connection-terminal CAR+. The second detection terminal 302 of the load detection module 30 is electrically connected to the negative load-connection-terminal CAR-. The load detection module 30 is configured to detect the connection state of the external load and the electrical parameter of the external load through the first detection terminal 301 and the second detection terminal 302, and output the detection signal VOUT_SN through the detection signal output terminal 303. It can be understood that corresponding to different insertion states of the external load and different usage states of the external load, output values of the detection signal VOUT_SN are different.

In this implementation, the controller 40 is further electrically connected to the detection signal output terminal 303 of the load detection module 30. The controller 40 is configured to receive the detection signal VOUT_SN output at the detection signal output terminal 303, and control the switch module 23 according to the detection signal VOUT_SN, so as to control a discharge state of the power module to discharge the external load. For example, as illustrated in FIG. 1, the controller 40 is configured to receive, through a detection signal input terminal 41, the detection signal VOUT_SN output at the detection signal output terminal 303, and determines the connection state of the external load and the electrical parameter of the external load according to the detection signal received, so as to determine whether to output the drive signal RELAY_EN2 to turn on the switch module 23. The controller 40 can output the drive signal RELAY_EN2 through a drive signal output terminal 42.

In this implementation, the detection signal VOUT_SN includes an analog signal. The controller 40 is configured to determine, according to a value of the analog signal VOUT_SN, the connection state of the external load and an electrical parameter of the external load in a forward connection state.

Specifically, in this implementation, when the load detection module 30 detects that the load connection terminal 22 is in a no-load state, that is, the external load is not connected to the load connection terminal 22, the detection signal VOUT_SN output by the load detection module 30 includes a first voltage-signal. The first voltage-signal is used for controlling the switch module 23 to disconnect the electrical connection between the power connection terminal 21 and the load connection terminal 22, so as to disconnect the electrical connection between the power module and the external load. For example, the first voltage-signal can be transmitted to the controller 40. The controller 40 is configured to control, according to the first voltage-signal, the switch module 23 to disconnect the electrical connection between the power connection terminal 21 and the load connection terminal 22. A voltage value of the first voltage-signal is a first preset value, thus ensuring that the controller 40 can accurately recognize the connection state of the external load. It can be understood that when the external load is not connected to the load connection terminal 22, the switch module 23 is turned off, which can ensure the electricity safety of the circuit.

When the load detection module 30 detects that the external load is reversely connected to the load connection terminal 22, the detection signal VOUT_SN output by the load detection module 30 includes a second voltage-signal. The second voltage-signal is used for controlling the switch module 23 to disconnect the electrical connection between the power connection terminal 21 and the load connection terminal 22, so as to disconnect the electrical connection between the power module and the external load. For example, the second voltage-signal can be transmitted to the controller 40. The controller 40 is configured to control, according to the second voltage-signal, the switch module 23 to disconnect the electrical connection between the power connection terminal 21 and the load connection terminal 22. A voltage value of the second voltage-signal is a second preset value, and the first preset value is different from the second preset value, thus ensuring that the controller 40 can accurately recognize the connection state of the external load. It can be understood that when the external load is reversely connected to the load connection terminal 22, the switch module 23 is turned off, which can ensure the electricity safety of the circuit.

When the load detection module 30 detects that the external load is forward connected to the load connection terminal 22, the detection signal VOUT_SN output by the load detection module 30 includes a third voltage-signal. A voltage value of the third voltage-signal is in a third voltage-value-range, and the voltage value of the third voltage-signal is in a preset proportional relationship with a load voltage value of the external load. In this implementation, both the voltage value of the first voltage-signal and the voltage value of the second voltage-signal are out of the third voltage-value-range. In this way, it can be ensured that different connection states of the external load can be accurately recognized according to different voltage values of the detection signal.

The third voltage-value-range may be a certain voltage value range except for the voltage value of the first voltage-signal and the voltage value of the second voltage-signal, or the third voltage-value-range may include all values except for the voltage value of the first voltage-signal and the voltage value of the second voltage-signal. It is assumed that there are a voltage value U1 of the first voltage-signal and a voltage value U2 of the second voltage-signal. Exemplarily, the third voltage-value-range is set to be (U0, U3) in advance, and both U1 and U2 do not belong to (U0, U3). When a voltage value Ux of the detection signal received belongs to (U0, U3), it is determined that the detection signal includes the third voltage-signal. Exemplarily, when the voltage value Ux of the detection signal received does not belong to U1 and U2, it is determined that the detection signal includes the third voltage-signal. In this implementation, the electrical parameter of the external load includes the load voltage of the external load. The voltage value of the third voltage-signal is used for determining the load voltage of the external load. In addition, if it is determined that the load voltage of the external load satisfies a preset condition, the third voltage-signal is further used for controlling the switch module 23 to conduct the electrical connection between the power connection terminal 21 and the load connection terminal 22, so that the power module can be electrically connected to the external load and discharge the external load. For example, the third voltage-signal can be transmitted to the controller 40. The controller 40 is further configured to determine the load voltage of the external load according to the voltage value of the third voltage-signal when receiving the third voltage-signal. The controller 40 is further configured to determine whether the load voltage of the external load satisfies a preset condition. In addition, if it is determined that the load voltage of the external load satisfies the preset condition, the controller 40 is configured to output the drive signal RELAY_EN2 to the switch module 23, so as to control the switch module 23 to conduct the electrical connection between the power connection terminal 21 and the load connection terminal 22.

For example, the external load is a vehicle battery, and the power module is an energy-storage assembly of the jump starter device. In an implementation, according to a voltage value of the third voltage-signal received by the controller 40 in preset time, the controller 40 is configured to determine whether a drop amplitude of a voltage value of the vehicle battery in the preset time exceeds a preset amplitude threshold, that is, determine whether voltage droop occurs to the voltage of the vehicle battery. When determining that the drop amplitude of the voltage value of the vehicle battery in the preset time exceeds the preset amplitude threshold, that is, when determining that the voltage droop occurs to the voltage of the vehicle battery, the controller 40 is further configured to determine that the load voltage of the vehicle battery satisfies the preset condition, and output the drive signal RELAY_EN2 to turn on the switch module 23, so that the jump starter device supplies power to the vehicle battery. In other words, the preset condition includes that the drop amplitude of the voltage value of the vehicle battery in the preset time exceeds the preset amplitude threshold.

It can be understood that if the drop amplitude of the voltage value of the vehicle battery in the preset time exceeds the preset amplitude threshold, that is, the voltage droop occurs to the voltage of the vehicle battery, it indicates that the vehicle battery is used for starting the vehicle. In this case, the jump starter device can be utilized to supply power to the vehicle battery by turning on the switch module 23, so as to start the vehicle. It can be understood that the controller 40 turns on the switch module 23 only when the vehicle battery is used for starting the vehicle. In this way, not only the power of the jump starter device can be saved, but also the vehicle can be ensured to be started.

In another implementation, the controller 40 is configured to determine, according to the voltage value of the third voltage-signal received, whether the voltage value of the vehicle battery is less than a first preset-voltage-threshold. When the controller 40 determines that the voltage value of the vehicle battery is less than the first preset-voltage-threshold, the controller 40 is configured to determine, according to the voltage value of the third voltage-signal received in the preset time, whether the drop amplitude of the voltage value of the vehicle battery in the preset time exceeds the preset amplitude threshold. When the controller 40 determines that the drop amplitude of the voltage value of the vehicle battery in the preset time exceeds the preset amplitude threshold, the controller 40 is configured to determine that the load voltage of the vehicle battery satisfies the preset condition, and output the drive signal RELAY_EN2 to turn on the switch module 23, so that the power module supplies power to the vehicle battery. In other words, the preset condition is that the load voltage value of the external load is less than the first preset-voltage-threshold, and that the drop amplitude of the load voltage value of the external load in the preset time exceeds the preset amplitude threshold.

It can be understood that if the voltage value of the vehicle battery is less than the first preset-voltage-threshold, it indicates that the vehicle battery is insufficiently in electric quantity, and the vehicle battery is in a state of lacking of electricity. If the drop amplitude of the voltage value of the vehicle battery in the preset time exceeds the preset amplitude threshold, it indicates that the vehicle battery is used for starting the vehicle. In this way, the controller 40 is configured to turn on the switch module 23 only when the smart connection device 100 is forward connected to the vehicle battery in a state of lacking of electricity and the vehicle battery is used for starting the vehicle. Therefore, not only the power of the jump starter device can be saved, but also the vehicle can be ensured to be started, and the vehicle battery can be prevented from reversely charging the jump starter device.

For the smart connection device 100 provided in the present disclosure, the load detection module 30 simultaneously detects the connection state of the external load and the electrical parameter of the external load, and outputs a single analog signal to simultaneously indicate the connection state of the external load and the electrical parameter of the external load. Then according to the single analog signal, the controller 40 analyzes data and makes a corresponding control operation, so that the collection requirements of the controller 40 for the analog signal can be effectively reduced. Therefore, the complexity of the peripheral control circuit is reduced, the circuit becomes simpler to be controlled, and the failure rate of the control system can be reduced, thereby greatly improving the safety and reliability of the product, and reducing the material cost of the product.

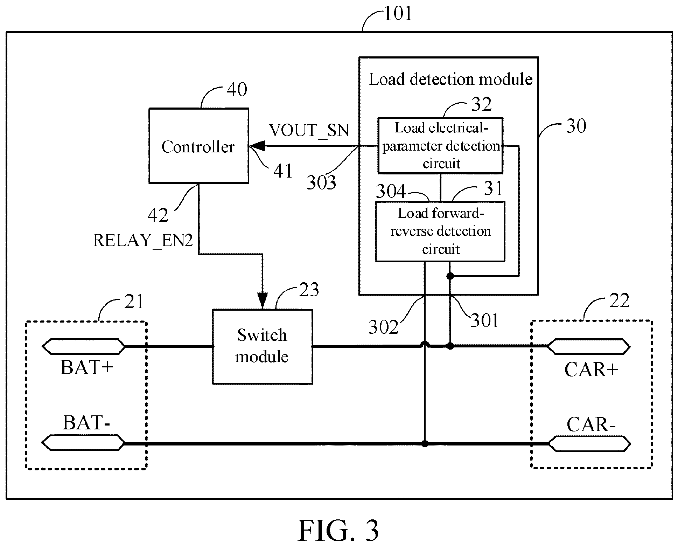

FIG. 3 is a schematic diagram of functional modules of a smart connection device 101 provided in a second implementation of the present disclosure. It may be noted that the smart connection device 101 corresponds to the smart connection device 100 illustrated in FIG. 1. As illustrated in FIG. 3, in the second implementation, the load detection module 30 of the smart connection device 101 includes a load forward-reverse connection detection circuit 31 and a load electrical-parameter detection circuit 32. The load forward-reverse connection detection circuit 31 is electrically connected to the load connection terminal 22. The load forward-reverse connection detection circuit 31 is configured to detect a connection state of the external load, and output a corresponding connection-state signal through a voltage output terminal 304 of the load forward-reverse connection detection circuit 31.

The load electrical-parameter detection circuit 32 is electrically connected to the voltage output terminal 304 of the load forward-reverse connection detection circuit 31 and the load connection terminal 22. The load electrical-parameter detection circuit 32 is configured to receive the connection-state signal output by the load forward-reverse connection detection circuit 31 and detect an electrical parameter of the external load, and output a corresponding detection signal VOUT_SN at least according to the connection-state signal output by the load forward-reverse connection detection circuit 31 and the electrical parameter.

For the smart connection device 101 provided in the second implementation of the present disclosure, the load forward-reverse connection detection circuit 31 detects the connection state of the external load, the load electrical-parameter detection circuit 32 detects the electrical parameter of the external load, and the voltage output terminal of the load forward-reverse connection detection circuit 31 is electrically connected to the load electrical-parameter detection circuit 32. Therefore, by means of the load electrical-parameter detection circuit 32, the analog signal detected by the load forward-reverse connection detection circuit 31 and the analog signal detected by the load electrical-parameter detection circuit 32 are combined into the single analog signal, and then the single analog signal is transmitted to the controller 40, so that the controller 40 only needs to perform data analysis on the single analog signal and make the corresponding control operation on the switch module 23. Therefore, the collection requirements of the controller 40 for the analog signal can be effectively reduced, the complexity of the peripheral control circuit is reduced, the circuit becomes simpler to be controlled, and the failure rate of the control system can be reduced. Therefore, the safety and reliability of the product are greatly improved, the labor and material resource costs of product after-sales service are reduced, and the material cost of the product is also reduced.

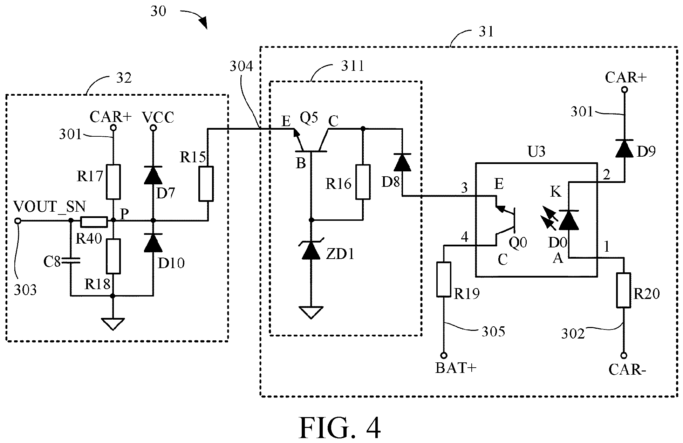

FIG. 4 is a schematic diagram of a circuit structure of a load detection module 30 provided in the first implementation of the present disclosure. As illustrated in FIG. 4, the load forward-reverse connection detection circuit 31 includes a sensor device U3 and a switch circuit 311. The sensor device U3 includes a first detection pin 2, a second detection pin 1, a voltage input pin 4, and an output pin 3. The first detection pin 2 is electrically connected to the first detection terminal 301 through a diode D9. An anode of the diode D9 is electrically connected to the first detection pin 2. A cathode of the diode D9 is electrically connected to the first detection terminal 301. The second detection pin 1 is electrically connected to the second detection terminal 302 through a resistor R20.

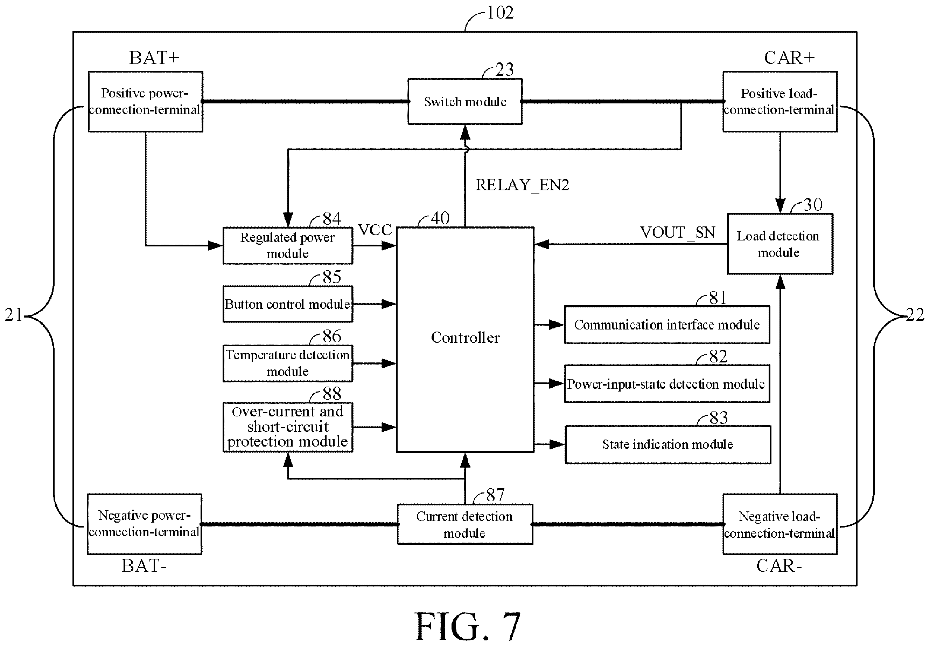

In the first implementation, the load forward-reverse connection detection circuit 31 further includes a voltage input terminal 305. The voltage input terminal 305 is electrically connected to a voltage source. In an implementation, the voltage source may be the power module. In other words, the voltage input terminal 305 is electrically connected to the positive power-connection-terminal BAT+. In this way, the input voltage received by the voltage input terminal 305 may be supplied by the power module. Optionally, in another implementation, the voltage source may be a regulated power module 84 (as illustrated in FIG. 7). In this way, the input voltage received by the voltage input terminal 305 may be supplied by a stable voltage VCC, such as a voltage of 5V, output by the regulated power module 84. The voltage input pin 4 is electrically connected to the voltage input terminal 305 through a resistor R19.

The sensor device U3 is configured to detect the connection state of the external load through the first detection pin 2 and the second detection pin 1. In the first implementation, if the sensor device U3 detects that the load connection terminal 22 is in a no-loaded state or the external load is forward connected to the load connection terminal 22, the sensor device U3 is configured to disconnect an electrical connection between the voltage input pin 4 of the sensor device U3 and the output pin 3 of the sensor device U3, to make the output pin 3 be in a non-output state. If the sensor device U3 detects that the external load is reversely connected to the load connection terminal 22, the sensor device U3 is configured to conduct the electrical connection between the voltage input pin 4 of the sensor device U3 and the output pin 3 of the sensor device U3, to make the output pin 3 output a voltage signal provided by the voltage source, that is, the voltage of the voltage source is output from the output pin 3 of the sensor device U3 after being stepped down by the resistor R19.

In the first implementation, the sensor device U3 is a photoelectric isolation device. The photoelectric isolation device includes a light-emitting diode (LED) D0 and a phototransistor Q0. The LED D0 is electrically connected between the first detection pin 2 and the second detection pin 1. Specifically, an anode A of the LED D0 is electrically connected to the second detection pin 1, and a cathode K of the LED D0 is electrically connected to the first detection pin 2. The phototransistor Q0 is electrically connected between the voltage input pin 4 and the output pin 3. Specifically, a base of the phototransistor Q0 is coupled to the LED D0, a collector C is electrically connected to the voltage input pin 4, and an emitter E is electrically connected to the output pin 3.

In the first implementation, the switch circuit 311 is electrically connected between the voltage output terminal 304 and the output pin 3 of the sensor device U3. When the switch circuit 311 receives no voltage signal output by the output pin 3 of the sensor device U3, the switch circuit 311 is in an off state, to make the voltage output terminal 304 being in a non-output state. When the switch circuit 311 receives the voltage signal output by the output pin 3 of the sensor device U3, the switch circuit 311 is in on state, to make the voltage output terminal 304 output a second preset-voltage-threshold.

Specifically, the switch circuit 311 includes a triode Q5 and a Zener diode ZD1. A base B of the triode Q5 is grounded through the Zener diode ZD1. The base B of the triode Q5 is further electrically connected to a collector C of the triode Q5 through a resistor R16. The collector C of the triode Q5 is further electrically connected to the output pin 3 of the sensor device U3 through a diode D8. In other words, the collector C of the triode Q5 serves as an input terminal of the switch circuit 311 to receive the voltage signal output by the output pin 3 of the sensor device U3. An anode of the diode D8 is electrically connected to the output pin 3 of the sensor device U3, and a cathode of the diode D8 is electrically connected to the collector C of the triode Q5. The switch circuit 311 is electrically connected to the voltage output terminal 304 of the load forward-reverse connection detection circuit 31 through an emitter E of the triode Q5 of the switch circuit. In the first implementation, the triode Q5 is an NPN triode.

In the first implementation, the electrical parameter of the external load is a load voltage of the external load. The load electrical-parameter detection circuit 32 includes a first voltage-division-resistor R17 and a second voltage-division-resistor R18 that sequentially connected in series between the first detection terminal 301 and a ground terminal. A connection point between the first voltage-division-resistor R17 and the second voltage-division-resistor R18 includes a voltage detection point P. The voltage detection point P is further electrically connected to the voltage output terminal 304 (i.e., the emitter E of the triode Q5) of the load forward-reverse connection detection circuit 31 and the detection signal output terminal 303 of the load detection module 30.

In the first implementation, a third voltage-division-resistor R15 may be further disposed between the voltage detection point P and the voltage output terminal 304. The voltage detection point P is further electrically connected to the ground terminal through a resistor R40 and a capacitor C8. The resistor R40 and the capacitor C8 form a resistor-capacitor (RC) filter circuit, to filter out a noise signal contained in a signal output from the voltage detection point P to the detection signal output terminal 303, so that the detection signal output terminal 303 can receive and output a stable detection signal VOUT_SN. The load electrical-parameter detection circuit 32 further includes a diode D7 and a diode D10 that are connected in series between the ground terminal and the voltage source. A connection point between the diode D7 and the diode D10 is electrically connected to the voltage detection point P. A circuit including the diode D7 and the diode D10 forms a clamping circuit to protect the detection signal input terminal 41 of the controller 40.

An operation principle of the whole circuit structure of the load detection module 30 illustrated in FIG. 4 will be introduced below.

During operation, if the load connection terminal 22 is in a no-load state, no current flows through the LED D0, the LED D0 emits no light, and the phototransistor Q0 is turned off, so that the electrical connection between the voltage input pin 4 of the sensor device U3 and the output pin 3 of the sensor device U3 is disconnected. In this case, the sensor device U3 is in a non-output state. The triode Q5 is turned off since the base B of the triode Q5 receives no voltage signal output by the sensor device U3, so that the voltage output terminal 304 is in a non-output state. In other words, the load forward-reverse connection detection circuit 31 does not output any signal when detecting that the load connection terminal 22 is in a no-load state.

When the load connection terminal 22 is in a no-load state, the first detection terminal 301 receives no input voltage, and the voltage detection point P is electrically connected to the ground terminal through the second voltage division resistor R18 and is in a low-level state. Therefore, the detection signal VOUT_SN output at the detection signal output terminal 303 is a fixed low-level signal. The fixed low-level signal is the first voltage-signal whose voltage value is the first preset value.

If the external load is reversely connected to the load connection terminal 22, that is, a positive electrode of the external load is electrically connected to the negative load-connection-terminal CAR-, and a negative electrode of the external load is electrically connected to the positive load-connection-terminal CAR+, a current flows through the LED D0, so that the LED D0 emits light. The base of the phototransistor Q0 generates a current after being illuminated by the light, so that the phototransistor Q0 is turned on, thereby conducting the electrical connection between the voltage input pin 4 of the sensor device U3 and the output pin 3 of the sensor device U3. In this case, the output pin 3 outputs the voltage signal provided by the voltage source.

The triode Q5 is saturated and turned on when the base B of the triode Q5 receives the voltage signal output by the output pin 3 of the sensor device U3 through the resistor R16. Meanwhile, a voltage value of the base B of the triode Q5 is clamped at a fixed voltage value U1 under a voltage stabilizing effect of the Zener diode ZD1. Since the triode Q5 is saturated and turned on, a voltage difference between the base B of the triode Q5 and the emitter E of the triode Q5 is U_{Q5_BE} ≈ 0.7V, and a voltage value of the emitter E of the triode Q5 is also clamped at a second preset-voltage-threshold U2, where U2 = U1-0.7. Therefore, the second preset-voltage-threshold U2 is output at the voltage output terminal 304, that is, the load forward-reverse connection detection circuit 31 outputs the second preset-voltage-threshold U2. In this case, a voltage value of the connection-state signal equals to the second preset-voltage-threshold U2.

Since the external load is reversely connected to the load connection terminal 22, the first detection terminal 301 is electrically connected to the negative electrode of the external load, which is equivalent to that the first voltage-division-resistor R17 and the second voltage-division-resistor R18 are electrically connected between two ground terminals. Therefore, for the voltage of the external load, no dividing voltage is generated at the voltage detection point P. The voltage detection point P receives the second preset-voltage-threshold U2 output by the voltage output terminal 304 of the load forward-reverse connection detection circuit 31. The second preset-voltage-threshold U2 output by the voltage output terminal 304 is proportionally divided by the third voltage-division-resistor R15 and the second voltage-division-resistor R18. Therefore, the voltage at the voltage detection point P is: U_{P} = U2*R18/(R15+R18) = (U1-0.7)*R18/(R15+R18). A resistance value of the third voltage-division-resistor R15 and a resistance value of the second voltage-division-resistor R18, and the fixed voltage value U1 are not limited in the present disclosure.

It can be understood that after the smart connection device 101 leaves the factory, the triode Q5 and the Zener diode ZD1 remain unchanged in model and electrical parameter. Therefore, when the external load is reversely connected to the load connection terminal 22, the voltage of the base B of the triode Q5 can be clamped at the fixed voltage value U1 under the voltage stabilizing effect of the Zener diode ZD1, and the voltage of the emitter E of the triode Q5 can also be clamped at the second preset-voltage-threshold U2. It can be understood that after the smart connection device 101 leaves the factory, the third voltage dividing resistor R15 and the second voltage-division-resistor R18 also remain unchanged in resistance value. Therefore, when the external load is reversely connected to the load connection terminal 22, the voltage value of the voltage U_{P} at the voltage detection point P can be maintained at a preset fixed value, and the voltage value of the detection signal VOUT_SN output at the detection signal output terminal 303 can also be maintained at a preset fixed value. In this case, the detection signal VOUT_SN output at the detection signal output terminal 303 is the second voltage-signal described above. The preset fixed value is the second preset value.

If the external load is forward connected to the load connection terminal 22, that is, the positive electrode of the external load is electrically connected to the positive load-connection-terminal CAR+, and the negative electrode of the external load is electrically connected to the negative load-connection-terminal CAR-, no current flows through the LED D0, the LED D0 emits no light, and the phototransistor Q0 is turned off, thereby disconnecting the electrical connection between the voltage input pin 4 and the output pin 3 of the sensor device U3. In this case, the sensor unit U3 is in a non-output state. The triode Q5 is turned off since the base B of the triode Q5 receives no voltage signal output by the sensor device U3, so that the voltage output terminal 304 is in a non-output state. In other words, the load forward-reverse connection detection circuit 31 does not output any signal when detecting that the external load is forward connected to the load connection terminal 22.

Since the external load is forward connected to the load connection terminal 22, the first detection terminal 301 is electrically connected to the positive electrode of the external load and receives the input voltage, that is, the load voltage of the external load, and the load voltage of the external load is proportionally divided by the first voltage-division-resistor R17 and the second voltage-division-resistor R18. Therefore, the voltage at the voltage detection point P is: U_{P} = U_{CAR+}*R18/(R17+R18). A resistance value of the first voltage-division-resistor R17 and a resistance value of the second voltage-division-resistor R18 are not limited in the present disclosure. Under normal circumstances, the load voltage of the external load is usually above 6.7V.

It can be understood that after the smart connection device 101 leaves the factory, the first voltage-division-resistor R17 and the second voltage-division-resistor R18 remain unchanged in resistance value. Therefore, when the external load is forward connected to the load connection terminal 22, a voltage value of the voltage U_{P} at the voltage detection point P can maintain a preset proportional relationship with a voltage value of the load voltage U_{CAR+} of the external load. In other words, the voltage value of the voltage U_{P} at the voltage detection point P can linearly follow the change in the voltage value of the load voltage U_{CAR+} of the external load, so that the voltage value of the detection signal VOUT_SN output at the detection signal output terminal 303 maintain a preset proportional relationship with the voltage value of the load voltage U_{CAR+} of the external load. In this case, the detection signal VOUT_SN output at the detection signal output terminal 303 is the third voltage-signal described above. It can be understood that, the preset proportional relationship between the voltage value of the third voltage-signal and the voltage value of the load voltage U_{CAR+} of the external load is determined by the resistance value of the first voltage-division-resistor R17 and the resistance value of the second voltage-division-resistor R18.

In the first implementation, as can be seen from the above analysis, in the load detection module 30, resistance values of resistive components (e.g., the resistor R15, the resistor R17, and the resistor R18) and the type of the Zener diode ZD1 may be set in advance according to requirements, so that the first voltage-signal and the second voltage-signal respectively have different voltage values, and both the voltage value of the first voltage-signal and the voltage value of the second voltage-signal are out of the third voltage-value-range to which the voltage value of the third voltage-signal belongs. The first voltage-signal, the second voltage-signal, and the third voltage-signal are different from one another in voltage value, and the voltage value of the first voltage-signal and the voltage value of the second voltage-signal each are a preset value. Therefore, when the load detection module 30 transmits the detection signal VOUT_SN to the controller 40, the controller 40 can determine the connection state of the external load and the load voltage of the external load according to the voltage value of the detection signal VOUT_SN.

For the smart connection device 101 provided in the above first implementation, the load forward-reverse connection detection circuit 31 including the photoelectric isolation device, and the switch circuit 311 detects the connection state of the external load and outputs the corresponding analog signal. The load electrical-parameter detection circuit 32 including a damped voltage divider detects the load voltage of the external load and outputs a corresponding analog signal. After combining two analog signals into a single analog signal, the load electrical-parameter detection circuit 32 transmits the single analog signal to the controller 40. Therefore, the controller 40 only needs to perform data analysis on the single analog signal and make corresponding control operation on the single analog signal. Therefore, the collection requirements of the controller 40 for the analog signal can be effectively reduced, the complexity of the peripheral control circuit is reduced, the circuit becomes simpler to be controlled, and the failure rate of the control system can be reduced. Therefore, the safety and reliability of the product are greatly improved, the labor and material resource costs of product after-sales service are reduced, and the material cost of the product is also reduced.

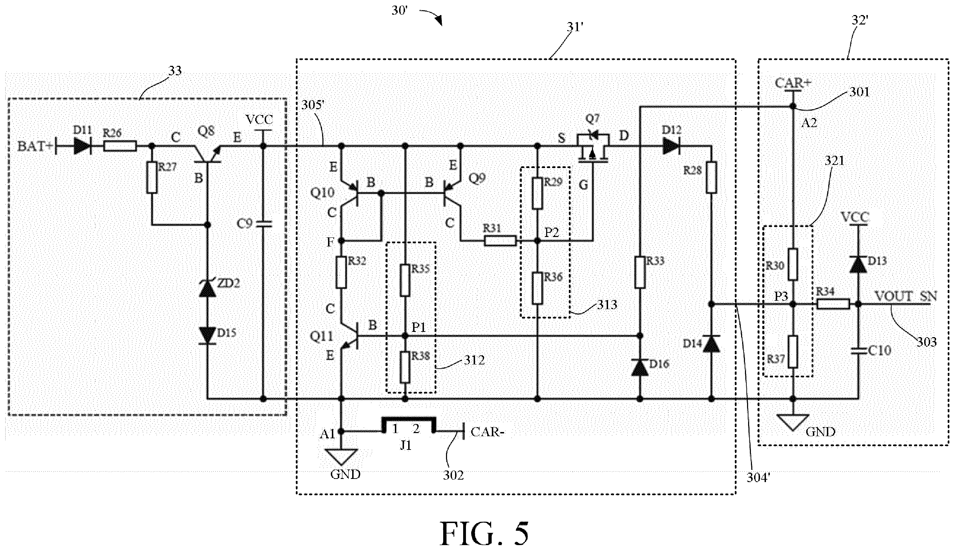

FIG. 5 is a schematic diagram of a circuit structure of a load detection module 30' provided in a second implementation of the present disclosure. As illustrated in FIG. 5, the load detection module 30' includes a load forward-reverse connection detection circuit 31' and a load electrical parameter detecting circuit 32'. The load forward-reverse connection detection circuit 31' includes a voltage input terminal 305' and a voltage output terminal 304'. The voltage input terminal 305' is electrically connected to a voltage source such as an output terminal of the power management circuit 33, to receive a stable voltage VCC, such as a voltage of 5V, output by the power management circuit 33. In other implementations, the voltage source may also be the regulated power module 84 (as illustrated in FIG. 7). In this way, the stable voltage received by the voltage input terminal 305' may be supplied by the regulated power module 84.

In the second implementation, the load forward-reverse connection detection circuit 31' includes a combined switch circuit. The combined switch circuit includes a first switch-unit Q11, a second switch-unit Q10, a third switch-unit Q9, a fourth switch-unit Q7, a first voltage-division-module 312, and a second voltage-division-module 313.

The first voltage-division-module 312 includes at least two resistors R35 and R38 electrically connected in series between the voltage input terminal 305' and the ground terminal GND. A connection point between the at least two resistors R35 and R38 included in the first voltage-division-module 312 includes a first voltage-division-node P1.

The first switch-unit Q11, the second switch-unit Q10, and the third switch-unit Q9 each at least include a first connection terminal E, a second connection terminal C, and a control terminal B. Each switch unit can be controlled to be turned on or turned off by controlling a voltage value supplied to the control terminal B of each switch unit.

In the second implementation, the second switch-unit Q10 and the first switch-unit Q11 are electrically connected in series between the voltage input terminal 305' and the ground terminal GND. For example, the first connection terminal E of the second switch-unit Q10 is electrically connected to the voltage input terminal 305', the second connection terminal C of the second switch-unit Q10 is electrically connected to the second connection terminal C of the first switch-unit Q11, and the first connection terminal E of the first switch-unit Q11 is electrically connected to the ground terminal GND. The first voltage-division-node P1 is electrically connected to the control terminal B of the first switch-unit Q11 and the first detection terminal 301. A diode D16 connected in parallel to a resistor R38 is further reversely connected between the first voltage-division-node P1 and the ground terminal GND. A resistor R32 is further connected in series between the second switch-unit Q10 and the first switch-unit Q11.

The second voltage-division-module 313 includes at least two resistors R29 and R36 electrically connected in series between the voltage input terminal 305' and the ground terminal GND. A connection point between the at least two resistors R29 and R36 included in the second voltage-division-module 313 includes a second voltage-division-node P2.

The third switch-unit Q9 and the resistor R29 are electrically connected in parallel between the voltage input terminal 305' and the second voltage-division-node P2. For example, the first connecting terminal E of the third switch-unit Q9 and one terminal of the resistor R29 each are electrically connected to the voltage input terminal 305', and the second connection terminal C of the third switch-unit Q9 and the other terminal of the resistor R29 each are electrically connected to the second voltage-division-node P2. The control terminal B of the second switch-unit Q10 is electrically connected to the control terminal B of the third switch-unit Q9, and the control terminal B of the second switch-unit Q10 and the control terminal B of the third switch-unit Q9 are jointly electrically connected to an electrical connection point F between the second switch-unit Q10 and the first switch-unit Q11. A resistor R31 connected in series to the third switch-unit Q9 may be further disposed between the voltage input terminal 305' and the second voltage-division-node P2. In other words, after the third switch-unit Q9 is connected in series to the resistor R31, the third switch-unit Q9 and the resistor R31 are connected in parallel to the resistor R29. For example, the second connection terminal C of the third switch-unit Q9 is electrically connected to the second voltage-division-node P2 through the resistor R31.

The fourth switch-unit Q7 at least includes a first connection terminal S, a second connection terminal D, and a control terminal G. The fourth switch-unit Q7 can be controlled to be turned on or turned off by controlling a voltage value supplied to the control terminal G of the fourth switch-unit Q7.

In the second implementation, the fourth switch-unit Q7 is electrically connected between the voltage input terminal 305' and the voltage output terminal 304'. For example, the first connection terminal S of the fourth switch-unit Q7 is electrically connected to the voltage input terminal 305', and the second connection terminal D of the fourth switch-unit Q7 is electrically connected to the voltage output terminal 304'. The control terminal G of the fourth switch-unit Q7 is electrically connected to the second voltage-division-node P2. A diode D14 is further reversely connected between the voltage output terminal 304' and the ground terminal GND. A diode D12 and a resistor R28 that are connected in series to the fourth switch-unit Q7 may further be disposed between the voltage input terminal 305' and the voltage output terminal 304'.

In the second implementation, the electrical parameter of the external load is the load voltage of the external load. The load electrical-parameter detection circuit 32' includes a third voltage-division-module 321. The third voltage-division-module 321 includes at least two resistors R30 and R37 connected in series between the first detection terminal 301 and the ground terminal GND. A connection point between the at least two resistors R30 and R37 included in the third voltage-division-module 321 includes a third voltage-division-node P3. The third voltage-division-node P3 is further electrically connected to the voltage output terminal 304' of the load forward-reverse connection detection circuit 31' and the detection signal output terminal 303 of the load detection module 30'.

In the second implementation, the third voltage-division-node P3 is further electrically connected to the ground terminal GND through a resistor R34 and a capacitor C10. The resistor R34 and the capacitor C10 form an RC filter circuit, to filter out a noise signal contained in a signal output from the third voltage-division-node P3 to the detection signal output terminal 303, so that the detection signal output terminal 303 can receive and output a stable detection signal VOUT_SN. In the second implementation, the detection signal output terminal 303 is further electrically connected to a voltage source VCC through a diode D13. An anode of the diode D13 is electrically connected to the detection signal output terminal 303. A circuit including the diode D13 forms a protection circuit for the detection signal input terminal 41 of the controller 40.

In the second implementation, the first switch-unit Q11 is a transistor that is turned on at a high level, such as a n-channel metal-oxide semiconductor (NMOS) transistor or a negative-positive-negative (NPN) triode. Each of the second switch-unit Q10, the third switch-unit Q9, and the fourth switch-unit Q7 is a transistor that is turned on at a low level, such as a p-channel metal-oxide semiconductor (PMOS) transistor or a positive-negative-positive (PNP) triode. Specifically, in the second implementation, the first switch-unit Q11 is an NPN triode, the second switch-unit Q10 and the third switch-unit Q9 are both PNP triodes, and the fourth switch-unit Q7 is a PMOS transistor. As illustrated in FIG. 5, the first connection terminal E is corresponding to an emitter of a triode, and the second connection terminal C is corresponding to a collector of the triode. The first switch-unit Q11 is electrically connected to the ground terminal GND through the emitter E of the first switch-unit Q11, and is electrically connected to the collector C of the second switch-unit Q10 through the collector C of the first switch-unit Q11 and the resistor R32. The emitter E of the second switch-unit Q10, the emitter E of the third switch-unit Q9, and the source S of the fourth switch-unit Q7 each are electrically connected to the voltage input terminal 305'.

An operation principle of the whole circuit structure of the load detection module 30' illustrated in FIG. 5 will be introduced below.

During operation, if the load connection terminal 22 is in a no-load state, the stable voltage VCC received by the voltage input terminal 305' is proportionally divided by the first voltage-division-module 312, and a first voltage U_{P1} generated at the first voltage-division-node P1 enables the first switch-unit Q11 to be turned on. A resistance value of the resistor R35 and a resistance value of the resistor R38 are not limited in the present disclosure, as long as the first voltage U_{P1} at the first voltage-division-node P1 can satisfy the condition for enabling the first switch-unit Q11 to be turned on when the load connection terminal 22 is in a no-load state. For example, the resistance value of the resistor R35 and the resistor value of the resistor R38 may both be set as 10KΩ.

The control terminal B of the second switch-unit Q10 and the control terminal B of the third switch-unit Q9 are electrically connected to the ground terminal GND through the resistor R32 and the first switch-unit Q11 that is turned on, so that the second switch-unit Q10 and the third switch-unit Q9 are turned on simultaneously. After the third switch-unit Q9 is turned on, the resistor R31 is connected in parallel to the resistor R29, and the resistor R31 and the resistor R29 that are connected in parallel are connected in series to a resistor R36, resulting in that an equivalent resistance between the voltage input terminal 305' and the second voltage-division-node P2 becomes smaller. Therefore, the voltage at the second voltage-division-node P2 is improved, so that a voltage difference between the second voltage-division-node P2 and the voltage input terminal 305', that is, an absolute value of a gate-source voltage VGS of the fourth switch-unit Q7, is less than an absolute value of a turn-on voltage VTP of the fourth switch-unit Q7, thereby turning off the fourth switch-unit Q7. A resistance value of the resistor R31, a resistance value of the resistor R29, and a resistance value of the resistor R36 are not limited in the present disclosure, as long as when the load connection terminal 22 is in a no-load state, the voltage difference between the second voltage-division-node P2 and the voltage input terminal 305' can satisfy the condition of turning off the fourth switch-unit Q7, and when the load connection terminal 22 is reversely connected to the load connection terminal 22, the voltage difference between the second voltage-division-node P2 and the voltage input terminal 305' can satisfy the condition of turning on the fourth switch-unit Q7 (which will be introduced below). For example, the resistance value of the resistor R31 may be set as 1KS2, the resistance value of the resistor R29 may be set as 100KS2, and the resistance value of the resistor R36 may be set as 10KΩ.

When the fourth switch-unit Q7 is turned off, the stable voltage VCC received by the voltage input terminal 305' is unable to be transmitted to the voltage output terminal 304' through the fourth switch-unit Q7, so that the voltage output terminal 304' is in a non-output state. In other words, the load forward-reverse connection detection circuit 31' does not output any signal when detecting that the load connection terminal 22 is in a no-load state.

Meanwhile, after the first switch-unit Q11 is turned on, the voltage difference between the base B of the first switch-unit Q11 and the emitter E of the first switch-unit Q11 is U_{Q11_BE} ≈ 0.7V, and the first switch-unit Q11 is electrically connected to the ground terminal GND through the emitter E of the first switch-unit Q11. Therefore, the voltage U_{P1} at each of the first voltage-division-node P1 and the base B of the first switch-unit Q11 is clamped at 0.7V. In other words, the voltage U_{P1} at each of the base B of the first switch-unit Q11 and the first voltage-division-node P1 is maintained at a preset voltage value. The voltage U_{P1} at the first voltage-division-node P1 is transmitted to the first detection terminal 301 through a resistor R33. In other words, the voltage U_{P1} at the first voltage-division-node P1 is transmitted in a current circuit formed by the resistor R33, the first detection terminal 301, the third voltage-division-module 321, and the ground terminal GND. In this way, the voltage U_{P1} at the first voltage-division-node P1 is proportionally divided by the resistor R33 and the at least two resistors R30 and R37 included in the third voltage-division-module 321, so that a voltage U_{P3} at the third voltage-division-node P3 is: U_{P3} = 0.7*R37/(R33+R30+R37). A resistance value of the resistor R33, a resistance value of the resistor R30, and a resistance value of the resistor R37 are not limited in the present disclosure. It may be understood that after the smart connection device 101 leaves the factory, the resistor R33, the resistor R30, and the resistor R37 remain unchanged in resistance value. Therefore, a voltage value of the voltage U_{P3} at the third voltage-division-node P3 can be maintained at a preset fixed value when the load connection terminal 22 is in a no-load state. Accordingly, the voltage value of the detection signal VOUT_SN output at the detection signal output terminal 303 can also be maintained as a preset fixed value. In this case, the detection signal VOUT_SN output at the detection signal output terminal 303 is the first voltage-signal described above, and the preset fixed value is the first preset value described above.

If the external load is forward connected to the load connection terminal 22, that is, the positive electrode of the external load is electrically connected to the positive load-connection-terminal CAR+, the negative electrode of the external load is electrically connected to the negative load-connection-terminal CAR-, the stable voltage VCC received by the voltage input terminal 305' is proportionally divided by the at least two resistors R35 and R38 included in the first voltage-division-module 312, so that the first voltage U_{P1} at the first voltage-division-node P1 enables the first switch-unit Q11 to be turned on. As described above, when the first switch-unit Q11 is turned on, the second switch-unit Q10 and the third switch-unit Q9 are turned on, the fourth switch-unit Q7 is turned off, the voltage output terminal 304' is in a non-output state, and the voltage U_{P1} at the first voltage-division-node is clamped at 0.7V. In other words, the load forward-reverse connection detection circuit 31' does not output any signal when detecting that the external load is forward connected to the load connection terminal 22.

Since the voltage of the external load is generally higher than 6V-7V and higher than the voltage U_{P1} at the first voltage-division-node, the voltage of the first detection terminal 301 is higher than the voltage U_{P1} at the first voltage-division-node, so that the voltage U_{P1} at the first voltage-division-node cannot be transmitted to the third voltage-division-node P3 through the first detection terminal 301. In this case, the external load is forward connected to the load connection terminal 22, and the first detection terminal 301 is electrically connected to the positive electrode of the external load to receive the input voltage, that is, the load voltage of the external voltage, and the load voltage UCAR+ of the external load received by the first detection terminal 301 is proportionally divided by the at least two resistors R30 and R37 included in the third voltage-division-module 321, so that the voltage at the third voltage-division-node P3 is: U_{P3}=U_{CAR+}*R37/(R30+R37). Since the resistor R30 and the resistor R37 remain unchanged in resistance value, when the external load is forward connected to the load connection terminal 22, the voltage value of the voltage U_{P3} at the third voltage-division-node P3 can maintain a preset proportional relationship with the voltage value of the load voltage U_{CAR+}. In other words, the voltage value of the voltage U_{P3} at the third voltage-division-node P3 can linearly follow the change in the voltage value of the load voltage U_{CAR+}, so that the voltage value of the detection signal VOUT_SN output at the detection signal output terminal 303 can maintain a preset proportional relationship with the voltage value of the load voltage U_{CAR+} of the external load. In this case, the detection signal VOUT_SN output at the detection signal output terminal 303 is the third voltage-signal described above. It can be understood that the preset proportional relationship formed between the voltage value of the third voltage-signal and the load voltage value of the external load is determined by resistance values of the at least two resistors R30 and R37 included in the third voltage-division-module.

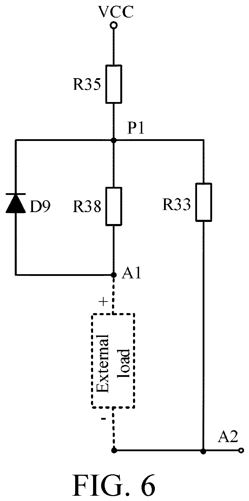

If the external load is reversely connected to the load connection terminal 22, that is, the positive electrode of the external load is electrically connected to the negative load-connection-terminal CAR-, and the negative electrode of the external load is electrically connected to the positive load-connection-terminal CAR+. For convenience of description, a connection node between the emitter E of the first switch-unit Q11 and the ground terminal GND is set as a first reference point A1, and the first detection terminal 301 is set as a second reference point A2. For an equivalent circuit diagram of circuit structures among the voltage input terminal 305', the first reference point A1, the second reference point A2, and the first voltage-division-node P1, reference can be made to FIG. 6. As illustrated in FIG. 6, when the load connection terminal 22 is in a no-load state, as described above, the voltage U_{P1} at the first voltage-division-node P1 is clamped at 0.7V. As described above, the second detection terminal 302 is electrically connected to the negative load-connection-terminal CAR- of the load connection terminal 22, and the negative load-connection-terminal CAR- is electrically connected to the ground terminal GND through a current detection element J1. The resistance of the current detection element J1 is very small and almost negligible, which is equivalent to a short circuit between the negative load-connection-terminal CAR- and the ground terminal GND. Therefore, when the external load is reversely connected to the load connection terminal 22, the first reference point A1 is electrically connected to the positive electrode of the external load and the second reference point A2 is electrically connected to the negative electrode of the external load, which is equivalent to the external load being electrically connected between the first reference point A1 and the second reference point A2. After the resistor R38 is connected in series to an internal resistor of the external load, the resistor R38 and the internal resistor of the external load are connected in parallel to the resistor R33, so that an equivalent resistance between the second reference point A2 and the first voltage-division-node P1 is reduced. In this case, it can be seen from taking the second reference point A2 as a reference point of zero potential that, the voltage at the first voltage-division-node P1 will decrease, that is, U_{P1} < 0.7V. In this way, when the load connection terminal 22 is switched from a no-load state to a state where the load connection terminal 22 is reversely connected to the external load, the first switch-unit Q11 is switched from an on state to an off state, and the second switch-unit Q10 and the third switch-unit Q9 each are in an off state since the control terminal B of the second switch-unit Q10 and the control terminal B the third switch-unit Q9 each receive no drive voltage signal. In this case, the stable voltage VCC received by the voltage input terminal 305' is proportionally divided by the at least two resistors R29 and R36 included in the second voltage-division-module 313, so that the voltage difference between the second voltage-division-node P2 and the voltage input terminal 305', that is, the absolute value of the gate-source voltage VGS of the fourth switch-unit Q7, is greater than the absolute value of the turn-on voltage VTP of the fourth switch-unit Q7, thereby turning on the fourth switch-unit Q7.

In this case, the stable voltage VCC received by the voltage input terminal 305' is transmitted to the voltage output terminal 304' through the fourth switch-unit Q7 that is turned on. In other words, the stable voltage VCC received by the voltage input terminal 305' is transmitted in a current circuit formed by the fourth switch-unit Q7 that is turned on, the diode D12, the resistor R28, the voltage output terminal 304', the third voltage-division-node P3, the resistor R37, and the ground terminal GND. In this way, the stable voltage input by the voltage input terminal 305' is received by the third voltage-division-node P3, and the stable voltage VCC input by the voltage input terminal 305' is proportionally divided by the resistor R28 and the resistor R37, so that the voltage at the third voltage-division-node P3 is:
U_{P3}=U_{VCC}*R37/(R28+R37). In this case, the voltage value of the connection-state signal is equal to the voltage value of the voltage U_{P3} at the third voltage-division-node P3. A resistance value of the resistor R28 is not limited in the present disclosure. It can be understood that after the smart connection device 101 leaves the factory, the resistance value of the resistor R28 remains unchanged, and thus the voltage value of the voltage U_{P3} at the third voltage-division-node P3 can be maintained at a preset fixed value when the external load is reversely connected to the load connection terminal 22. Accordingly, the voltage value of the detection signal VOUT_SN output at the detection signal output terminal 303 can also be maintained at a preset fixed value. In this case, the detection signal VOUT_SN output at the detection signal output terminal 303 is the second voltage-signal described above, and the preset fixed value is the second preset value described above. It may be understood that in other implementations, the resistor R28 may not be disposed between the voltage input terminal 305' and the voltage output terminal 304'.

In the second implementation, as can be seen from the above analysis, in the load detection module 30', resistance values of resistive components (e.g., the resistor R28, the resistor R30, the resistor R33, the resistor R37) and the voltage value of the stable voltage VCC supplied by the voltage source connected to the voltage input terminal 305' may be set in advance according to requirements, so that the first voltage-signal and the second voltage-signal respectively have different voltage values, and both the voltage value of the first voltage-signal and the voltage value of the second voltage-signal are out of the third voltage-value-range to which the voltage value of the third voltage-signal belongs. The first voltage-signal, the second voltage-signal, and the third voltage-signal are different from one another in voltage value, and the voltage value of the first voltage-signal and the voltage value of the second voltage-signal each are a preset value. Therefore, when the load detection module 30 transmits the detection signal VOUT_SN to the controller 40, the controller 40 can determine the connection state of the external load and the load voltage of the external load according to the voltage value of the detection signal VOUT_SN.

For the smart connection device 101 provided in the above second implementation, the load forward-reverse connection detection circuit 31' including the combined switch circuit detects the connection state of the external load and outputs the corresponding analog signal. The load electrical-parameter detection circuit 32' including a damped voltage divider detects the voltage of the external load by and outputs a corresponding analog signal. After combining the two analog signals into a single analog signal, the load electrical-parameter detection circuit 32' transmits the single analog signal to the controller 40 to perform data analysis and make corresponding control operation. Therefore, the collection requirements of the controller for the analog signal can be effectively reduced, the complexity of the peripheral control circuit is reduced, the circuit becomes simpler to be controlled, and the failure rate of the control system can be reduced. Therefore, the safety and reliability of the product are greatly improved, the labor and material resource costs of product after-sales service are reduced, and the material cost of the product is also reduced.

In addition, for the combined switch circuit, simple transistors (such as diodes, triodes, and field-effect transistors) and passive devices (such as resistors and capacitors) are employed to realize a detection function of a connection polarity of the external load, so that the connection state of the external load can be quickly detected based on the fast turn-on and fast turn-off characteristic of the transistors, thereby greatly improving the detection speed and effectiveness of relevant protection functions, and further improving safety and reliability of a power output control system.

In this implementation, the controller 40 may be a programmable control device, such as a micro-controller unit (MCU), a field-programmable-gate array (FPGA), or a digital signal processor (DSP). The controller 40 serves as a logic operation and control center of the smart connection device 101, and is mainly responsible for functions such as data collection and conversion, logic operation, data communication, execution of drive output, control, etc. It may be understood that the controller 40 may include multiple input and output ports, and the controller 40 can communicate and exchange information with other functional modules or external devices through the multiple input and output ports, so that the smart connection device 101 can realize functions such as connection, driving, control, etc.

FIG. 7 is a schematic diagram of functional modules of a smart connection device 102 provided in a third implementation of the present disclosure. As illustrated in FIG. 7, in the third implementation, the smart connection device 102 may further include a communication interface module 81 electrically connected to the controller 40. The controller 40 may be in communication with the external devices (such as an external power device or an external load) through the communication interface module 81. In this way, the controller 40 can obtain information such as a present battery voltage, a maximum current output capability, a battery temperature, an operation state, a software version information, etc., of the power module of the external power device, and determine, according to the obtained related information, whether the electrical parameter of the power module of the external power device satisfies a condition of discharging the external load. Therefore, the controller 40 can determine whether to output the drive signal RELAY_EN2 to turn on the switch module 23. It can be understood that the controller 40 may also send the software version information of the controller 40, normal and abnormal operation states of the smart connection device 102, the voltage and the output current signals of the external load, and the like, to the external power device for adaptation and related protection. In other words, through the communication interface module 81, the controller 40 of the smart connection device 102 can exchange information with an external device, and perform corresponding control.

It can be understood that when the communication provided by the communication interface module 81 is interrupted due to timeout or the data exchanged through the communication interface module 81 is abnormal, or when the voltage provided by the external power device is not in a threshold range set by a program, the controller 40 stops outputting the drive signal RELAY_EN2, thereby turning off the switch circuit 23 to turn off the current output circuit 20 and outputting a corresponding state indications, to ensure safety of the system and he external device.

Optionally, the smart connection device 102 further includes a power-input-state detection module 82. The power-input-state detection module 82 is electrically connected to the power connection terminal 21 and the controller 40. The power-input-state detection module 82 is configured to detect a connection state of the power module and output a corresponding detection signal to the controller 40. The power-input-state detection module 82 may be a voltage detection circuit.

Optionally, the smart connection device 102 further includes a state indication module 83 electrically connected to the controller 40. The state indication module 83 is configured to provide, according to a control signal output by the controller 40, a corresponding state prompt for a connection state of the external load, a voltage of the external load, an operation mode, etc., of the smart connection device 102. In an implementation, the state indication module 83 may include a load-state indication module. According to the received detection signal VOUT_SN, the controller 40 can determine the connection state of the external load and the electrical parameter of the external load, and output a control signal to control the load-state indication module to provide a corresponding prompt for the connection state of the external load and the electrical parameter of the external load. In another implementation, the state indication module 83 may also include an operation-mode indication module. The controller 40 can output a control signal according to the operation mode of the smart connection device 102, to control the operation-mode indication module to provide a corresponding prompt for the operation mode of the smart connection device 102. The state indication module 83 may include a display unit and/or an alarm unit. The display unit may include at least one LED or at least one liquid crystal display device. The display unit is configured to provide a corresponding prompt by emitting light or displaying information. The alarm unit may include at least one buzzer or loudspeaker. The alarm unit is configured to provide a corresponding prompt by making an alarm sound. It can be understood that through the state prompt of the state indication module 83, the user can be assisted to know whether the external load is correctly connected to the load connection terminal at any time. Therefore, when the external load is not correctly connected to the load connection terminal, the user can be informed to stop the connection in time and adjust the connection terminal of the external load, such as a clamping mode of a battery clamp device, so as to ensure safe application of the product. In addition, the user can also be assisted to know the voltage state of the external load and the state of the jump starter device at any time.

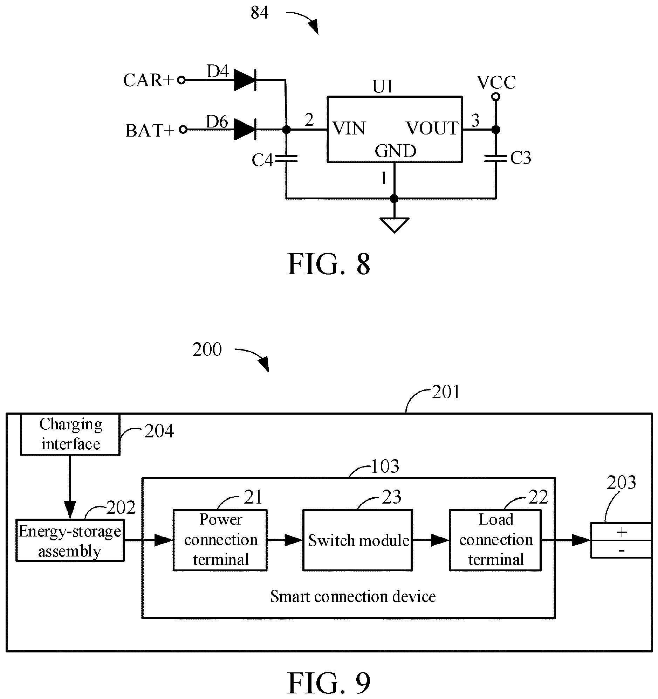

Optionally, the smart connection device 102 further includes a regulated power module 84 electrically connected to the power connection terminal 21 and/or the load connection terminal 22. As illustrated in FIG. 7 and FIG. 8, the regulated power module 84 is configured to receive an input voltage provided by the power module through the power connection terminal 21 such as the positive power-connection-terminal BAT+, and/or receive an input voltage provided by the external load through load connection terminal 22 such as the positive load-connection-terminal CAR+. In addition, the regulated power module 84 is further configured to perform voltage conversion on the input voltage to output the stable voltage VCC, such as a direct current (DC) voltage of 5V, so as to provide a stable power voltage for each functional module of the smart connection device 102. For example, when an external jump starter device is forward connected to the smart connection device 102 through the power connection terminal 21, the regulated power module 84 can receive the input voltage and be in normal operation, and output the stable voltage VCC to supply power to each functional module in the smart connection device 102. Therefore, each functional module is powered on and in normal operation. The regulated power module 84 may be a DC-DC converter or a linear voltage regulator, such as a low dropout (LDO) regulator.

Optionally, referring to FIG. 7 again, the smart connection device 102 further includes a button control module 85 electrically connected to the controller 40. The button control module 85 can receive a pressing operation of a user and generate a button instruction in response to the pressing operation. The button instruction is used for forcing the controller 40 to output the drive signal RELAY_EN2, so as to realize the discharge of the power source to the external load. It can be understood that the operation mode of the controller 40 may include an automatic output mode and a forced output mode. In an implementation, the controller 40 enters the automatic output mode by default after being powered on. When the controller 40 is in the automatic output mode, the controller 40 outputs the drive signal RELAY_EN2 only when determining that the external load is forward connected to the load connection terminal 22 and the voltage of the external load satisfies a preset condition. The controller 40 enters the forced output mode upon receiving the button instruction, and immediately outputs the drive signal RELAY_EN2 in response to the button instruction. In an implementation, the controller 40 resumes the automatic output mode after outputting the drive signal RELAY_EN2 in response to the button command.

Optionally, the smart connection device 102 further includes a temperature detection module 86 electrically connected to the controller 40. The temperature detection module 86 is configured to detect an operating temperature of the switch module 23 and/or a built-in power module, and feed back a detected temperature value to the controller 40. The controller 40 is further configured to analyze, according to the received temperature value, whether the operating temperature of the switch module 23 and/or the built-in power module exceeds a preset threshold. When determining that the operating temperature of the switch module 23 and/or the built-in power module exceeds the preset threshold, the controller 40 is configured to suspend outputting the drive signal RELAY_EN2, so that the switch module 23 is turned off, and the current output circuit 20 is cut off, thereby ensuring the safety of the system operation.

Optionally, the smart connection device 102 further includes a current detection module 87 electrically connected between the power connection terminal 21 and the load connection terminal 22. The current detection module 87 is further electrically connected to the controller 40. The current detection module 87 is configured to collect a current, that is, a discharge current output by the power module to the external load, in the current output circuit 20 in real time when the switch module 23 is in an on state, and feed back a detected current sampling signal to the controller 40. In this implementation, the current detection module 87 is electrically connected between the negative power-connection-terminal BAT- and the negative load-connection-terminal CAR-. In other implementations, the current detection module 87 may also be electrically connected between the positive power-connection-terminal BAT+ and the positive load-connection-terminal BAT+. The controller 40 is further configured to analyze, according to the received current sampling signal, whether the discharge of the power module is normal. When determining that the discharge of the power module is abnormal, the controller 40 is configured to suspend outputting the drive signal RELAY_EN2, so that the switch module 23 is turned off, and the current output circuit 20 is cut off, thereby ensuring the safety of the system operation.

Optionally, the smart connection device 102 further includes an over-current and short-circuit protection module 88. The over-current and short-circuit protection module 88 is electrically connected to the current detection module 87 and the controller 40. The over-current and short-circuit protection module 88 is configured to monitor whether a value of the current sampling signal output by the current detection module 87 exceeds a preset current threshold. When determining that the value of the current sampling signal output by the current detection module 87 exceeds the preset current threshold, the over-current and short-circuit protection module 88 is configured to output an interrupt trigger signal to the controller 40, so that the controller 40 immediately suspends outputting the drive signal. Therefore, the switch module 23 can be quickly turned off, and the current output circuit 20 is cut off, thereby ensuring the safety of the system operation. In other implementations, an output terminal of the over-current and short-circuit protection module 88 may also be directly connected to the switch module 23, so that the switch module 23 is directly turned off when the over-current and short-circuit protection module 88 detects that the value of the current sampling signal exceeds the preset current threshold.

For those skilled in the art, it can be understood that the foregoing schematic diagrams illustrated in FIG. 1, FIG. 3, and FIG. 7 are merely examples of the smart connection devices 100, 101, and 102 used in the present disclosure to implement functions, such as detecting the connection state of the external load and the electrical parameter of the external load, and discharging the external load by the power module, which do not constitute any limitation on the smart connection device. The smart connection device may include more or less components than those illustrated in the figure, or may combine certain components, or different components.

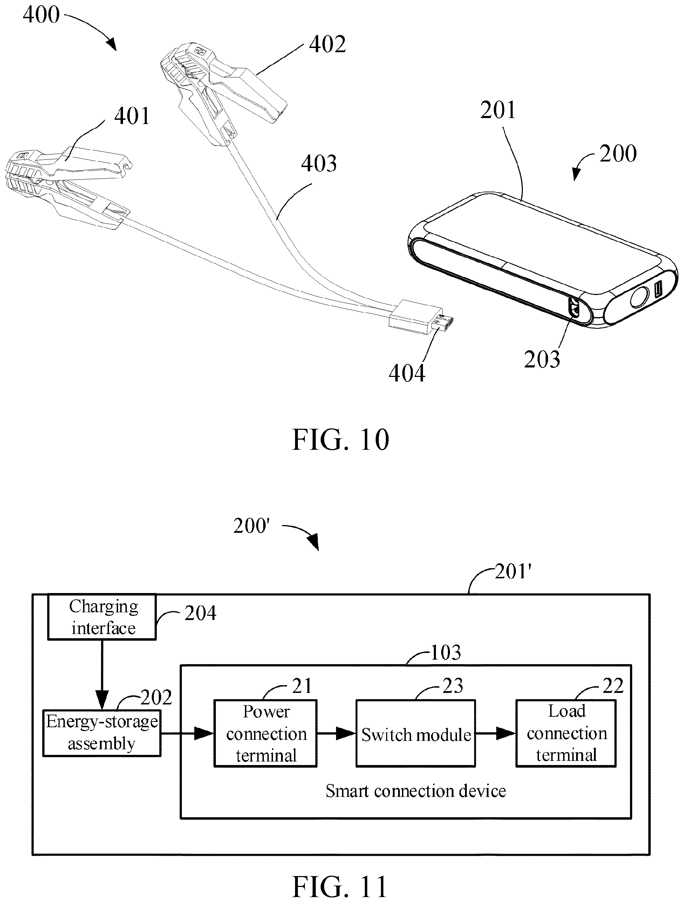

Referring to FIG. 9 and FIG. 10, a jump starter device 200 is further provided in the present disclosure. As illustrated in FIG. 9, the jump starter device 200 includes a jump starter housing 201, an energy-storage assembly 202, and a smart connection device 103. The smart connection device 103 may have a structure of the smart connection device 100-102 provided in any one of the foregoing implementations. The energy-storage assembly 202 and at least part of the smart connection device 103, such as the power connection terminal 21, the load connection terminal 22, the switch module 23, the load detection module 30, the controller 40, the communication interface module 81, the power-input-state detection module 82, the regulated power module 84, the temperature detection module 86, the current detection module 87, the overcurrent and short-circuit protection module 88, etc., may be disposed in the housing 201. At least part of the smart connection device 103, such as the state indication module 83 and the button control module 85, may be disposed on the housing 201.

In this implementation, the jump starter device 200 further includes a charging interface 204 disposed on the housing 201. The charging interface 204 is configured to be electrically connected to an external power source, such as a commercial power source, to receive external power from the external power source and charge the energy-storage assembly 202. The type of the charging interface 204 includes, but is not limited to, a DC interface, a universal serial bus (USB) interface, a Micro USB interface, a Mini USB interface, a Type-A interface, and a Type-C interface.

The power connection terminal 21 of the smart connection device 103 is electrically connected to the energy-storage assembly 202 of the jump starter device 200.

In this implementation, as illustrated in FIG. 9 to FIG. 10, the jump starter device 200 further includes a connection jack 203 disposed on the housing 201. The connection jack 203 is electrically connected to the load connection terminal 22 of the smart connection device 103. The connection jack 203 is configured to be electrically connected to the external load through to an external connection element 400. In other words, one end of the connection element 400 is detachably connected to the connection jack 203, and the other end of the connection element 400 is detachably connected to the external load. An appearance structure of the jump starter device 200 may have the structure of the jump starter device 200 illustrated in FIG. 10 or other structures. The appearance structure of the jump starter device 200 is not specifically limited in the present disclosure.

In this implementation, the connection element 400 is a wire clamp including a first wire clamp 401, a second wire clamp 402, a cable 403, and a connection plug 404. The cable 403 is configured to connect both the first wire clamp 401 and the second wire clamp 402 to the connection plug 404. The connection plug 404 is configured to be detachably and electrically connected to the connection jack 203. The first wire clamp 401 is configured to clamp the positive electrode of the external load. The second wire clamp 402 is configured to clamp the negative electrode of the external load. The positive electrode of the external load and the negative electrode of the external load are electrically connected to the positive load-connection-terminal CAR+ of the load connection terminal 22 and the negative load-connection-terminal CAR- of the load connection terminal 22 in one-to-one correspondence through the first wire clamp 401, the second wire clamp 402, the connection plug 404, and the connection jack 203.

Optionally, in another implementation, as illustrated in FIG. 11 to FIG. 12, a jump starter device 200' further includes a connection element 205. One end of the connection element 205 is electrically connected to the load connection terminal 22 of the smart connection device 103, and the other end of the connection element 205 is configured to be electrically connected to the external load. In other words, one end of the connection element 205 is built into the jump starter device 200'. In the anther implementation, the connection element 205 is a wire clamp. Except that the connection element 205 does not include the connection plug 404, the structure of the connection element 205 is similar to the structure of the connection element 400, which is not repeated herein.

In the jump starter devices 200 and 200' provided in the present disclosure, the smart connection device 103 described above is employed. By means of the load detection module 30 or 30', the connection state of the external load and the electrical parameters of the external load can be simultaneously detected, and a single analog signal is output to simultaneously indicate the connection state of the external load and the electrical parameter of the external load. Therefore, according to the single analog signal, the controller 40 only needs to perform data analysis and make the corresponding control operation, so that the collection requirements of the controller 40 for the analog signal can be effectively reduced. Therefore, the complexity of the peripheral control circuit is reduced, the circuit becomes simpler to be controlled, and the failure rate of the control system can be reduced, thereby greatly improving the safety and reliability of the product, and reducing the material cost of the product.

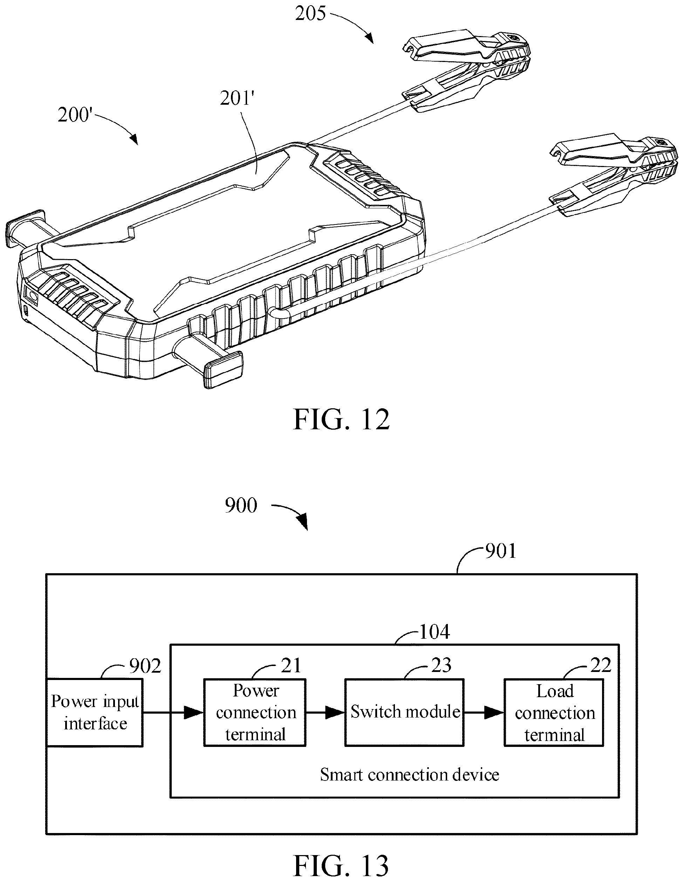

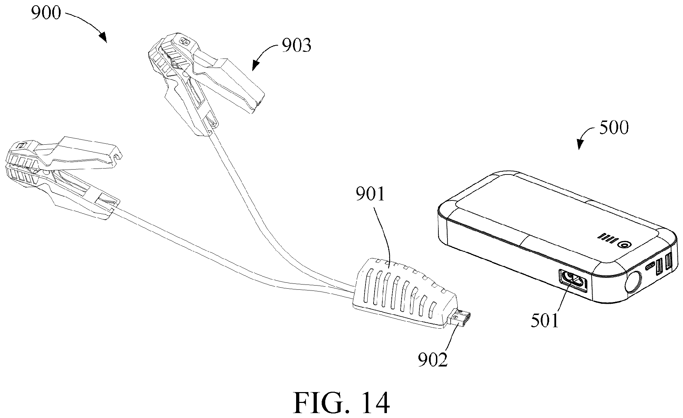

Referring to FIG. 13 and FIG. 14, a battery clamp device 900 is further provided in the present disclosure. The battery clamp device 900 includes a housing 901, a power input interface 902, a connection element 903, and a smart connection device 104. The smart connection device 104 may have a structure of the smart connection device 100-102 provided in any one of the foregoing implementations. The power input interface 902 is disposed on the housing 901. The power input interface 902 is configured to be electrically connected to an external power device 500, such as an emergency jump starter. The external power device 500 includes an energy-storage assembly (not shown in the figure). In this implementation, the power input interface 902 is a connection plug. The external power device 500 further includes a connection jack 501 adapted to the power input interface 902 of the battery clamp device 900. The battery clamp device 900 is electrically connected to the external power device 500 through a detachable electrical connection between the power input interface 902 and the connection jack 501.

At least part of the smart connection device 104, such as the power connection terminal 21, the load connection terminal 22, the switch module 23, the load detection module 30, the controller 40, the communication interface module 81, the power-input-state detection module 82, the regulated power module 84, the temperature detection module 86, the current detection module 87, the overcurrent and short-circuit protection module 88, etc., may be disposed in the housing 901. At least part of the smart connection device 104, such as the state indication module 83, the button control module 85, etc., may be disposed on the housing 901.

The power connection terminal 21 of the smart connection device 104 is electrically connected to the power input interface 902, and is electrically connected to the energy-storage assembly of the external power device 500 through the power input interface 902.

One end of the connection element 903 is electrically connected to the load connection terminal 22 of the smart connection device 104, and the other end of the connection element 903 is configured to be electrically connected to an external load. In this implementation, the connection element 903 is a wire clamp. Except that the connection element 903 does not include the connection plug 404, the structure of the connection element 903 is similar to the structure of the connection element 400, which is not repeated herein.

An appearance structure of the battery clamp device 900 may have the structure of the battery clamp device 900 illustrated in FIG. 14 or other structures. The appearance structure of the battery clamp device 900 is not specifically limited in the present disclosure.

In the battery clamp device 900 provided in the present disclosure, the smart connection device 104 described above is employed. By means of the load detection module 30 or 30', the connection state of the external load and the electrical parameter of the external load can be simultaneously detected, and a single analog signal is output to simultaneously indicate the connection state of the external load and the electrical parameter of the external load. Therefore, according to the single analog signal, the controller 40 only needs to perform data analysis and make the corresponding control operation, so that the collection requirements of the controller 40 for the analog signal can be effectively reduced. Therefore, the complexity of the peripheral control circuit is reduced, the circuit becomes simpler to be controlled, and the failure rate of the control system can be reduced, thereby greatly improving the safety and reliability of the product, and reducing the material cost of the product.

Finally, it may be noted that the above implementations are merely used to illustrate the technical solutions of the present disclosure, not to limit it. Although the present disclosure has been described in detail with reference to the above preferred implementations, those of ordinary skill in the art may understand that modifications or equivalent replacements of the technical solutions of the present disclosure may not depart from the spirit and scope of the technical solutions of the present disclosure.

## Claims

1. A smart connection device comprising:
a power connection terminal configured to be electrically connected to a power module;
a load connection terminal configured to be electrically connected to an external load;
a switch module electrically connected between the power connection terminal and the load connection terminal; and
a load detection module electrically connected to the load connection terminal, wherein the load detection module has a detection signal output terminal, the load detection module is configured to detect a state of the external load, and output a corresponding detection signal at the detection signal output terminal according to a detection result, and the detection signal is used for controlling the switch module.

2. The smart connection device of claim 1, wherein the state of the external load comprises a connection state of the external load and an electrical parameter of the external load.

3. The smart connection device of claim 1, further comprising a controller, configured to receive the detection signal output at the detection signal output terminal, and control the switch module according to the detection signal, to control a discharge state of the power module to the external load.

4. The smart connection device of claim 2, wherein the detection signal comprises an analog signal, and a value of the analog signal is used for determining the connection state of the external load and an electrical parameter of the external load in a forward connection state.

5. The smart connection device of claim 2 or 4, wherein the electrical parameter of the external load comprises at least one selected from a voltage, a current, or a power of the external load.

6. The smart connection device of claim 1 or 2, wherein when the load detection module detects that the load connection terminal is in a no-load state, the detection signal output by the load detection module comprises a first voltage-signal, a voltage value of the first voltage-signal being a first preset value; and
the first voltage-signal is used for controlling the switch module to disconnect an electrical connection between the power connection terminal and the load connection terminal.

7. The smart connection device of claim 6, wherein when the load detection module detects that the external load is reversely connected to the load connection terminal, the detection signal output by the load detection module comprises a second voltage-signal, a voltage value of the second voltage-signal being a second preset value, and the first preset value being different from the second preset value; and
the second voltage-signal is used for controlling the switch module to disconnect the electrical connection between the power connection terminal and the load connection terminal.

8. The smart connection device of claim 7, wherein when the load detection module detects that the external load is forward connected to the load connection terminal, the detection signal output by the load detection module comprises a third voltage-signal, a voltage value of the third voltage-signal being in a preset proportional relationship with a load voltage value of the external load; and
the voltage value of the third voltage-signal is used for determining a load voltage of the external load, and if the load voltage of the external load is determined to satisfy a preset condition, the third voltage-signal is further used for controlling the switch module to conduct the electrical connection between the power connection terminal and the load connection terminal.

9. The smart connection device of claim 8, wherein the preset condition comprises that a drop amplitude of the load voltage value of the external load in preset time exceeds a preset amplitude threshold; or
the preset condition comprises that the load voltage value of the external load is less than a first preset-voltage-threshold, and that the drop amplitude of the load voltage value of the external load in the preset time exceeds the preset amplitude threshold.

10. The smart connection device of claim 1 or 2, wherein the load detection module comprises:
a load forward-reverse connection detection circuit configured to detect a connection state of the external load, and output a corresponding connection-state signal according to the connection state of the external load; and
a load electrical-parameter detection circuit configured to receive the connection-state signal and detect an electrical parameter of the external load, and output the corresponding detection signal at least according to the connection-state signal and the electrical parameter.

11. The smart connection device of claim 10, wherein the load forward-reverse connection detection circuit is electrically connected to the load connection terminal, and the load electrical-parameter detection circuit is electrically connected to the load forward-reverse connection detection circuit and the load connection terminal.

12. The smart connection device of claim 10, wherein the load connection terminal comprises a positive load-connection-terminal and a negative load-connection-terminal, the positive load-connection-terminal and the negative load-connection-terminal are configured to be electrically connected to a negative electrode of the external load and a positive electrode of the external load in a one-to-one correspondence; and
the load detection module further comprises a first detection terminal electrically connected to the positive load-connection-terminal and a second detection terminal electrically connected to the negative load-connection-terminal; and the load detection module is configured to detect the connection state of the external load and the electrical parameter of the external load through the first detection terminal and the second detection terminal.

13. The smart connection device of claim 12, wherein the load forward-reverse connection detection circuit comprises:
a voltage input terminal electrically connected to a voltage source;
a sensor device comprising a first detection pin, a second detection pin, a voltage input pin, and an output pin, wherein the first detection pin of the sensor device is electrically connected to the first detection terminal, the second detection pin of the sensor device is electrically connected to the second detection terminal, and the voltage input pin of the sensor device is electrically connected to the voltage input terminal;
a voltage output terminal; and
a switch circuit electrically connected between the voltage output terminal and the output pin of the sensor device.

14. The smart connection device of claim 13, wherein the sensor device is configured to detect the connection state of the external load through the first detection pin and the second detection pin;
if the sensor device detects that the load connection terminal is in a no-load state or the external load is forward connected to the load connection terminal, the sensor device is configured to disconnect an electrical connection between the voltage input pin of the sensor device and the output pin of the sensor device, to make the output pin be in a non-output state; and wherein when the switch circuit receives no voltage signal output by the output pin of the sensor device, the switch circuit is in an off state, to make the voltage output terminal be in a non-output state; and
if the sensor device detects that the external load is reversely connected to the load connection terminal, the sensor device is configured to conduct the electrical connection between the voltage input pin of the sensor device and the output pin of the sensor device, to make the output pin output a voltage signal provided by the voltage source; and wherein when the switch circuit receives the voltage signal output by the output pin of the sensor device, the switch circuit is in an on state, to make the voltage output terminal outputs a second preset-voltage-threshold value.

15. The smart connection device of claim 14, wherein the sensor device comprises a photoelectric isolation device.

16. The smart connection device of claim 14, wherein the switch circuit comprises a triode and a Zener diode, a base of the triode is grounded through the Zener diode, and the base of the triode is further electrically connected to a collector of the triode through a resistor; the collector of the triode is electrically connected to the output pin of the sensor device; and an emitter of the triode is electrically connected to the voltage output terminal of the load forward-reverse connection detection circuit.

17. The smart connection device of claim 16, wherein the triode is turned off when the base of the triode receives no voltage signal output by the sensor device, to make the voltage output terminal be in a non-output state; and
the triode is saturated and turned on when the base of the triode receives the voltage signal output by the sensor device, and a voltage value of the base of the triode is clamped at a fixed voltage value under a voltage stabilizing effect of the Zener diode, to make a voltage value of the emitter of the triode be clamped at the second preset-voltage-threshold value, to output the second preset-voltage-threshold value at the voltage output terminal.

18. The smart connection device of claim 14, wherein the load electrical-parameter detection circuit comprises a first voltage-division-resistor and a second voltage-division-resistor that are sequentially connected in series between the first detection terminal and a ground terminal, a connection point between the first voltage-division-resistor and the second voltage-division-resistor comprises a voltage detection point, the voltage detection point is further electrically connected to the voltage output terminal of the load forward-reverse connection detection circuit and the detection signal output terminal of the load detection module.

19. The smart connection device of claim 18, wherein the detection signal comprises a first voltage-signal, a second voltage-signal, and a third voltage-signal;
when the load connection terminal is in the no-load state, the voltage detection point is electrically connected to the ground terminal and is in a low-level state, to make the detection signal output terminal output the first voltage-signal;
when the external load is reversely connected to the load connection terminal, the voltage detection point is configured to receive the second preset-voltage-threshold output by the voltage output terminal, to enable a voltage value at the voltage detection point to be maintained at a preset fixed value, to make the detection signal output terminal output the second voltage-signal; and
when the external load is forward connected to the load connection terminal, the first detection terminal is electrically connected to the positive electrode of the external load to receive a load voltage of the external load, the load voltage of the external load is proportionally divided by the first voltage-division-resistor and the second voltage-division-resistor, to enable the voltage value at the voltage detection point to be maintained a preset proportional relationship with a voltage value of the load voltage, to make the detection signal output terminal output the third voltage-signal.

20. The smart connection device of claim 12, wherein the load forward-reverse connection detection circuit comprises:
a voltage input terminal configured to receive a stable voltage provided by a voltage source;
a voltage output terminal;
a first switch-unit, a second switch-unit, a third switch-unit, and a fourth switch-unit;
a first voltage-division-module comprising at least two resistors electrically connected in series between the voltage input terminal and a ground terminal, wherein a connection point between the at least two resistors contained in the first voltage-division-module comprises a first voltage-division-node; wherein the second switch-unit and the first switch-unit are sequentially electrically connected in series between the voltage input terminal and the ground terminal, and the first voltage-division-node is electrically connected to a control terminal of the first switch-unit and the first detection terminal; and the negative load-connection-terminal is electrically connected to the ground terminal; and
a second voltage-division-module comprising at least two resistors electrically connected in series between the voltage input terminal and the ground terminal, wherein a connection point between the at least two resistors contained in the second voltage-division-module comprises a second voltage-division-node; wherein the third switch-unit is electrically connected between the voltage input terminal and the second voltage-division-node; a control terminal of the second switch-unit is electrically connected to a control terminal of the third switch-unit, and the control terminal of the second switch-unit and the control terminal of the third switch-unit are jointly electrically connected to an electrical connection point between the second switch-unit and the first switch-unit; and the fourth switch-unit is electrically connected between the voltage input terminal and the voltage output terminal, and a control terminal of the fourth switch-unit is electrically connected to the second voltage-division-node.

21. The smart connection device of claim 20, wherein the first switch-unit is a transistor that is turned on at a high level, and each of the second switch-unit, the third switch-unit, and the fourth switch-unit is a transistor that is turned on at a low level; and the first switch-unit is electrically connected to the ground terminal through an emitter of the first switch-unit;
when the load connection terminal is in a no-load state or the external load is forward connected to the load connection terminal, the stable voltage received by the voltage input terminal is proportionally divided by the first voltage-division-module, to make a voltage at the first voltage-division-node be maintained at a preset voltage value; and the first switch-unit is turned on by the voltage generated at the first voltage-division-node, to make the second switch-unit and the third switch-unit be simultaneously turned on and the fourth switch-unit be turned off, to make the voltage output terminal be in a non-output state; and
when the external load is reversely connected to the load connection terminal, the first switch-unit is switched from being in an on state to being in an off state, to make the second switch-unit and the third switch-unit be turned off, the fourth switch-unit be turned on, and the stable voltage received by the voltage input terminal be transmitted to the voltage output terminal through the fourth switch-unit that is turned on.

22. The smart connection device of claim 21, wherein the load electrical-parameter detection circuit comprises a third voltage-division-module, the third voltage-division-module comprises at least two resistors connected in series between the first detection terminal and the ground terminal, and a connection point between the at least two resistors contained in the third voltage-division-module comprises a third voltage-division-node; and
the third voltage-division-node is further electrically connected to the voltage output terminal of the load forward-reverse connection detection circuit and the detection signal output terminal of the load detection module.

23. The smart connection device of claim 22, wherein the detection signal comprises a first voltage-signal, a second voltage-signal, and a third voltage-signal;
when the load connection terminal is in the no-load state, a voltage at the first voltage-division-node is transmitted to the first detection terminal, and the voltage at the first voltage-division-node is proportionally divided by the third voltage-division-module, to make a voltage value at the third voltage-division-node be maintained at a preset fixed value, to make the detection signal output terminal output the first voltage-signal;
when the external load is forward connected to the load connection terminal, the first detection terminal is electrically connected to the positive electrode of the external load to receive a load voltage of the external load, the load voltage of the external load received by the first detection terminal is proportionally divided by the third voltage-division-module, to enable the voltage value at the third voltage-division-node to be maintained a preset proportional relationship with a voltage value of the load voltage, to make the detection signal output terminal output the third voltage-signal; and
when the external load is reversely connected to the load connection terminal, the third voltage-division-node is configured to receive the stable voltage input by the voltage input terminal, to enable the voltage value at the third voltage-division-node to be maintained at a preset fixed value, to make the detection signal output terminal output the second voltage-signal.

24. The smart connection device of claim 3, further comprising a state indication module electrically connected to the controller, wherein the state indication module is configured to provide, according to a control signal output by the controller, a state prompt corresponding to at least one selected from a connection state of the external load, an electrical parameter of the external load, and an operation mode of the smart connection device.

25. A jump starter device comprising:
a jump starter housing;
an energy-storage assembly; and
the smart connection device of any one of claims 1 to 24, wherein the energy-storage assembly and at least part of the smart connection device are disposed in the jump starter housing, and the power connection terminal of the smart connection device is electrically connected to the energy-storage assembly.

26. The jump starter device of claim 25, further comprising:
a connection jack disposed on the housing, wherein the connection jack is electrically connected to the load connection terminal of the smart connection device, and the connection jack is configured to be electrically connected to the external load through an external connection element; and/or
a connection element, wherein one end of the connection element is electrically connected to the load connection terminal of the smart connection device, and the other end of the connection element is configured to be electrically connected to the external load.

27. A battery clamp device comprising:
a battery clamp housing;
a power input interface disposed on the battery clamp housing, the power input interface being configured to be electrically connected to an external power device, wherein the external power device comprises an energy-storage assembly;
the smart connection device of any one of claims 1 to 23, wherein at least part of the smart connection device is disposed in the battery clamp housing, and the power connection terminal of the smart connection device is electrically connected to the power input interface, and is configured to be electrically connected to the energy-storage assembly of the external power device through the power input interface; and
a connection element, wherein one end of the connection element is electrically connected to the load connection terminal of the smart connection device, and the other end of the connection element is configured to be electrically connected to the external load.
